(19) Europäisches Patentamt / European Patent Office / Office européen des brevets

(11) **EP 4 443 364 A1**

(12) **EUROPEAN PATENT APPLICATION**
published in accordance with Art. 153(4) EPC

(43) Date of publication:
**09.10.2024 Bulletin 2024/41**

(21) Application number: **21969677.0**

(22) Date of filing: **31.12.2021**

(51) International Patent Classification (IPC):
**G06Q 20/14** $^{(2012.01)}$ **H04L 9/32** $^{(2006.01)}$

(52) Cooperative Patent Classification (CPC):
**G06Q 20/14; H04L 9/32**

(86) International application number:
**PCT/CN2021/143588**

(87) International publication number:
**WO 2023/123322 (06.07.2023 Gazette 2023/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventor: **ZHAO, Yuhang**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **IDENTITY AUTHENTICATION METHOD, DEVICE, AND SYSTEM**

(57) Embodiments of this application provide an identity authentication method. The method is performed by a blockchain that supports a smart contract, and the blockchain stores first anonymous identity information. The method includes: receiving an authentication request from a user node, where the authentication request includes second anonymous identity information, and the second anonymous identity information is associated with identity information of the user node; and determining, based on the first anonymous identity information and the second anonymous identity information, whether identity authentication on the user node succeeds. In this way, because anonymous identity information is used in an identity authentication process, privacy information of a user is not leaked. This helps improve security of user identity authentication.

> **S210:** A blockchain that supports a smart contract receives an authentication request from a user node, where the authentication request includes second anonymous identity information, and the second anonymous identity information is associated with identity information of the user node

> **S220:** Determine, based on first anonymous identity information and the second anonymous identity information, whether the identity information of the user node succeeds, where the blockchain stores the first anonymous identity information

FIG. 2

## Description

### TECHNICAL FIELD

Embodiments of this application relate to the field of automobile technologies, and specifically, to an identity authentication method, apparatus, and system.

### BACKGROUND

With social and technological development, electrification, networking, intelligence and sharing become a new direction of automobile industry development. Identity authentication on a vehicle user also becomes an important technology. For example, in terms of an electric vehicle charge service, a vehicle of a user can obtain a charge service only after identity authentication on the user succeeds. In terms of vehicle over-the-air (over-the-air, OTA) upgrade, the vehicle of the user can obtain an OTA upgrade service only after the identity authentication on the user succeeds. In terms of an automobile insurance service, user identity confirmation is also an indispensable step.

Currently, in an identity authentication process of the vehicle user, privacy information of the user is usually stored on an authentication server in a plaintext form. If the authentication server is attacked, the privacy information of the user may be leaked. For example, in terms of the electric vehicle charge service, a current electric vehicle charge service provider (charge service provider, CSP) usually relies on identity authentication on a central server other than department of motor vehicles (department of motor vehicles, DMV) to ensure validity of a charging vehicle. The central server usually stores the privacy information of the user, for example, personal information of the user, in a plaintext form. A centralized electric vehicle charge service mechanism increases a risk of disclosing the privacy information of the user.

Therefore, how to reduce the risk of disclosing the privacy information of the user is a problem urgently to be resolved.

### SUMMARY

Embodiments of this application provide an identity authentication method, apparatus, and system, to effectively reduce a risk of disclosing privacy information of a user, and further improve security of user identity authentication.

According to a first aspect, an identity authentication method is provided. The method is performed by a blockchain that supports a smart contract, and the blockchain stores first anonymous identity information. The method includes: receiving an authentication request from a user node, where the authentication request includes second anonymous identity information, and the second anonymous identity information is associated with identity information of the user node; and determining, based on the first anonymous identity information and the second anonymous identity information, whether identity authentication on the user node succeeds.

It should be understood that the second anonymous identity information is associated with the identity information of the user node, that is, to-be-authenticated second anonymous identity information is associated with the identity information of the user node.

It should be noted that performing the foregoing method by the blockchain that supports the smart contract may be understood as that the smart contract on the blockchain implements the foregoing method, and the foregoing method may be implemented by running a segment of program code on the blockchain.

In a possible implementation, if the first anonymous identity information matches the second anonymous identity information, the identity authentication on the user node succeeds.

In a possible implementation, if the first anonymous identity information does not match the second anonymous identity information, the identity authentication on the user node fails.

In this embodiment of this application, the first anonymous identity information stored in the smart contract is compared with the second anonymous identity information that is sent by the user node to the blockchain in an authentication process, to determine whether the identity authentication on the user node succeeds. In this way, because anonymous identity information is used in an identity authentication process, privacy information of a user is not leaked, which helps improve security of user identity authentication. In addition, any node that has a computing capability on the blockchain can provide computing power for execution of the smart contract. Therefore, compared with an authentication process of a centralized server, an identity authentication process based on the blockchain can reduce computing pressure and storage pressure of a server used for identity authentication to some extent.

With reference to the first aspect, in some implementations of the first aspect, the authentication request includes the second anonymous identity information encrypted by using a private key of the user node. The method further includes decrypting the authentication request information based on a public key corresponding to the private key of the user node, to obtain the second anonymous identity information.

In this embodiment of this application, the authentication request is encrypted by using the private key of the user node, so that security in an authentication request transmission process can be improved, and authenticity and non-forgery of the authentication request sent by the user node can be ensured.

With reference to the first aspect, in some implementations of the first aspect, the authentication request further includes a first timestamp, and before the determining, based on the first anonymous identity information and the second anonymous identity information, whether identity authentication on the user node succeeds, the method further includes: determining that the first timestamp is within a preset time range.

In a possible implementation, if the first timestamp is not within the preset time range, the identity authentication on the user node fails.

In this embodiment of this application, it is determined whether a timestamp of the authentication request sent by the user node is within the preset range, so that a replay attack can be effectively defended against, thereby improving security of a user identity authentication process. For example, an authorized user node A sends the second anonymous identity information of the user node A and the first identification information to the smart contract of the blockchain in an authentication process, and an unauthorized user node B is also on the blockchain. The unauthorized user node B intercepts the second anonymous identity information of the authorized user node A and the first identification information by forging an address, and the unauthorized user node B may obtain a corresponding service through authentication based on the intercepted the information of the authorized user node A. Before authenticating the second anonymous identity information and the first identification information, if the blockchain first checks that timestamps of the authentication requests sent by the user node are within the preset range, an unauthorized user node can be effectively prevented from obtaining a corresponding service through authentication.

With reference to the first aspect, in some implementations of the first aspect, the authentication request further includes first identification information, the second anonymous identity information includes information about a user vehicle, the first identification information includes identification information of a charging pile and identification information of a charge service provider CSP node to which the charging pile belongs, and the charging pile is a charging pile to which the user vehicle is connected. The method further includes: after the identity authentication succeeds, sending indication information to the CSP node, where the indication information indicates the CSP node to provide a charge service for the user vehicle by using the charging pile.

With reference to the first aspect, in some implementations of the first aspect, the authentication request further includes a first random number, the first random number is a random number obtained by the user node from the charging pile. Before the sending indication information to the CSP node, the method further includes: requesting a random number of the charging pile from the CSP node; receiving a second random number from the CSP node, where the second random number is a random number used before the random number of the charging pile is updated; and determining that the first random number matches the second random number.

In a possible implementation, if the first random number does not match the second random number, identity authentication on the user node fails.

In this embodiment of this application, whether the first random number in the authentication request sent by the user node matches the second random number obtained from the charging pile is determined, so that the replay attack can be effectively defended against, thereby further improving security of a user identity authentication process. For example, the authorized user node A sends the second anonymous identity information of the user node A and the first identification information to the smart contract of the blockchain in the authentication process, and the unauthorized user node B is also on the blockchain. The unauthorized user node B intercepts the second anonymous identity information of the authorized user node A, the first identification information, and the first random number by forging an address, and the unauthorized user node B may obtain the charge service through authentication based on the intercepted information about the authorized user node A. After the user vehicle obtains a random number of the charging pile, the random number of the charging pile is updated. Therefore, if the blockchain verifies whether the first random number in the authentication request of the user node is correct after authenticating the second anonymous identity information of the user node and the first identification information, an unauthorized user node can be effectively prevented from obtaining the charge service through authentication, and security in a user identity authentication process is further improved.

With reference to the first aspect, in some implementations of the first aspect, the method further includes: receiving revenue information that is of the CSP node and that is sent by the user node; and updating an account balance of the CSP node based on the revenue information.

In this embodiment of this application, the CSP node that provides the charge service updates a charging revenue on the blockchain through the smart contract, and does not directly charge through the user node. Therefore, the CSP node cannot learn of a charging pile from which the charging revenue comes. This avoids a malicious CSP from estimating driving privacy of the user vehicle by using the charging pile and a charging fee, and further improves privacy security of the user.

With reference to the first aspect, in some implementations of the first aspect, the revenue information is revenue information encrypted by using an additive homomorphic public key of the CSP node.

In this embodiment of this application, the revenue information is encrypted by using an additive homomorphic public key of the CSP node, and this improves revenue privacy security of the CSP node that provides the charge service.

With reference to the first aspect, in some implementations of the first aspect, before the receiving an authentication request from a user node, the method further includes: receiving first information sent by the user node, where the first information includes a third random number, and the third random number is a random number corresponding to the first anonymous identity information; sending second information to a vehicle management node, where the second information includes the third random number; receiving the first anonymous identity information determined by the vehicle management node based on the third random number; and storing a correspondence between an identifier of the user node and the first anonymous identity information in the smart contract of the blockchain, where the identifier of the user node is generated by the blockchain when the user node accesses the blockchain.

In a possible implementation, the receiving the first anonymous identity information determined by the vehicle management node based on the third random number includes: The first anonymous identity information is first anonymous identity information encrypted by using a private key of the vehicle management node. If the encrypted first anonymous identity information is successfully decrypted by the blockchain, a correspondence between an identifier of the user node and the first anonymous identity information is stored in the smart contract of the blockchain.

In this embodiment of this application, the vehicle management node stores the anonymous user identity information and vehicle information in the smart contract based on the third random number. This not only can ensure that user privacy is not leaked in a charge service authentication process, but also can prevent a malicious user from tampering with the anonymous identity information, to ensure authenticity and validity of the anonymous user identity information and the vehicle information.

According to a second aspect, an identity authentication method is provided. The method is performed by a user node. The method includes: determining an authentication request, where the authentication request includes second anonymous identity information; and sending the authentication request to a blockchain that supports a smart contract, where the second anonymous identity information is associated with identity information of the user node.

It should be understood that the second anonymous identity information is associated with the identity information of the user node, that is, to-be-authenticated second anonymous identity information is associated with the identity information of the user node. The second anonymous identity information is used by the blockchain that supports the smart contract to determine whether identity authentication on the user node succeeds.

It should be noted that performing the foregoing method by the blockchain that supports the smart contract may be understood as that the smart contract on the blockchain implements the foregoing method, and the foregoing method may be implemented by running a segment of program code on the blockchain.

In this embodiment of this application, first anonymous identity information stored in the smart contract is compared with the second anonymous identity information sent by the user node to the blockchain in the authentication process, to determine whether the identity authentication on the user node succeeds. In this way, because anonymous identity information is used in an identity authentication process, privacy information of a user is not leaked, which helps improve security of user identity authentication.

With reference to the second aspect, in some implementations of the second aspect, the method further includes: encrypting the second anonymous identity information by using a private key of the user node.

In this embodiment of this application, the authentication request is encrypted by using the private key of the user node, so that security in an authentication request transmission process can be improved, and authenticity and non-forgery of the authentication request sent by the user node can be ensured.

With reference to the second aspect, in some implementations of the second aspect, the authentication request may further include a first timestamp, and the first timestamp is associated with determining time of the authentication request.

It should be understood that the first timestamp is used by the blockchain to determine whether the first timestamp is within a preset time range before determining whether identity authentication on the user node succeeds.

In this embodiment of this application, it is determined whether a timestamp of the authentication request sent by the user node is within the preset range, so that a replay attack can be effectively defended against, thereby improving security of a user identity authentication process. For example, an authorized user node A sends the second anonymous identity information of the user node A and the first identification information to the smart contract of the blockchain in an authentication process, and an unauthorized user node B is also on the blockchain. The unauthorized user node B intercepts the second anonymous identity information of the authorized user node A and the first identification information by forging an address, and the unauthorized user node B may obtain a corresponding service through authentication based on the intercepted the information of the authorized user node A. Before authenticating the second anonymous identity information and the first identification information, if the blockchain first checks that timestamps of the authentication requests sent by the user node are within the preset range, an unauthorized user node can be effectively prevented from obtaining a corresponding service through authentication.

With reference to the second aspect, in some implementations of the second aspect, the authentication request further includes first identification information, and the second anonymous identity information includes information about a user vehicle. The method further includes obtaining the first identification information from a charging pile. The first identification information includes identification information of the charging pile and identification information of a charge service provider CSP node to which the charging pile belongs, and the charging pile is a charging pile to which the user vehicle is connected.

It should be understood that the first identification information is used by the blockchain to indicate the CSP node to provide a charge service for the user vehicle by using the charging pile.

With reference to the second aspect, in some implementations of the second aspect, the obtaining first identification information from a charging pile includes: displaying a plurality of to-be-selected CSP nodes in a charge service application in response to a CSP node obtaining operation of the user; displaying a plurality of to-be-selected charging piles in the charge service application in response to a CSP node selection operation of the user; and obtaining the first identification information in response to a charging pile selection operation of the user.

In this embodiment of this application, the user node may select, from the charge service application (application, APP), charge services provided by different charge service providers, so that redundancy of apps that have a same charge service function and that are of the user node can be effectively reduced.

With reference to the second aspect, in some implementations of the second aspect, the authentication request may further include a first random number. The determining an authentication request further includes: obtaining the first random number based on the first identification information, where the first random number is at least used to identify effectiveness of obtaining the charge service by the user vehicle.

It should be understood that the first random number is at least used to identify the effectiveness of obtaining the charge service by the user vehicle, that is, the first random number is at least used by the blockchain to indicate whether the charging pile provides the charge service for the user vehicle.

With reference to the second aspect, in some implementations of the second aspect, the method may further include: sending revenue information that is of the CSP node and that is received from the charging pile, where the revenue information is used to update an account balance of the CSP node.

In this embodiment of this application, the CSP node that provides the charge service updates a charging revenue on the blockchain through the smart contract, and does not directly charge through the user node. Therefore, the CSP node cannot learn of a charging pile from which the charging revenue comes. This avoids a malicious CSP from estimating driving privacy of the user vehicle by using the charging pile and a charging fee, and further improves privacy security of the user.

With reference to the second aspect, in some implementations of the second aspect, the revenue information is revenue information encrypted by using an additive homomorphic public key of the CSP node.

In this embodiment of this application, the revenue information is encrypted by using an additive homomorphic public key of the CSP node, and this improves revenue privacy security of the CSP node that provides the charge service.

With reference to the second aspect, in some implementations of the second aspect, before the sending the authentication request to a blockchain that supports a smart contract, the method further includes: receiving a third random number from a vehicle management node, where the third random number is a random number corresponding to first anonymous identity information; and sending first information to the blockchain, where the first information includes the third random number.

It should be understood that the third random number is used by the blockchain to obtain the first anonymous identity information from a vehicle management node.

In this embodiment of this application, the vehicle management node stores the anonymous user identity information and vehicle information in the smart contract based on the third random number. This not only can ensure that user privacy is not leaked in a charge service authentication process, but also can prevent a malicious user from tampering with the anonymous identity information, to ensure authenticity and validity of the anonymous user identity information and the vehicle information.

According to a third aspect, an identity authentication apparatus is provided. The apparatus is used in a blockchain that supports a smart contract, and the blockchain stores first anonymous identity information. The apparatus includes a transceiver module and a processing module. The transceiver module is configured to receive an authentication request from a user node, the authentication request includes second anonymous identity information, and the second anonymous identity information is associated with identity information of the user node. The processing module is configured to determine, based on the first anonymous identity information and the second anonymous identity information, whether identity authentication on the user node succeeds.

It should be understood that the second anonymous identity information is associated with the identity information of the user node, that is, to-be-authenticated second anonymous identity information is associated with the identity information of the user node.

It should be noted that performing the foregoing method by the blockchain that supports the smart contract may be understood as that the smart contract on the blockchain implements the foregoing method, and the foregoing method may be implemented by running a segment of program code on the blockchain.

In a possible implementation, if the first anonymous identity information matches the second anonymous identity information, the identity authentication on the user node succeeds.

In a possible implementation, if the first anonymous identity information does not match the second anonymous identity information, the identity authentication on the user node fails.

In this embodiment of this application, the blockchain compares the first anonymous identity information stored in the smart contract with the second anonymous identity information that is sent by the user node to the blockchain in an authentication process, to determine whether the identity authentication on the user node succeeds. In this way, because anonymous identity information is used in an identity authentication process, privacy information of a user is not leaked, which helps improve security of user identity authentication. In addition, any node that has a computing capability on the blockchain can provide computing power for execution of the smart contract. Therefore, compared with an authentication process of a centralized server, an identity authentication process based on the blockchain can reduce computing pressure and storage pressure of a server used for identity authentication to some extent.

With reference to the third aspect, in some implementations of the third aspect, the authentication request includes the second anonymous identity information encrypted by using a private key of the user node. The processing module is further configured to decrypt the authentication request information based on a public key corresponding to the private key of the user node to obtain the second anonymous identity information.

In this embodiment of this application, the authentication request is encrypted by using the private key of the user node, so that security in an authentication request transmission process can be improved, and authenticity and non-forgery of the authentication request sent by the user node can be ensured.

With reference to the third aspect, in some implementations of the third aspect, the authentication request further includes a first timestamp, and before the determining, based on the first anonymous identity information and the second anonymous identity information, whether identity authentication on the user node succeeds, the processing module is further configured to determine that the first timestamp is within a preset time range.

In a possible implementation, if the first timestamp is not within the preset time range, the identity authentication on the user node fails.

In this embodiment of this application, it is determined whether a timestamp of the authentication request sent by the user node is within the preset range, so that a replay attack can be effectively defended against, thereby improving security of a user identity authentication process. For example, an authorized user node A sends the second anonymous identity information of the user node A and the first identification information to a smart contract of the blockchain in an authentication process, and an unauthorized user node B is also on the blockchain. The unauthorized user node B intercepts the second anonymous identity information and the first identification information of the authorized user node A by forging an address, and the unauthorized user node B may obtain a corresponding service through authentication based on the intercepted information of the authorized user node A. Before authenticating the second anonymous identity information and the first identification information, if the blockchain first checks that timestamps of the authentication requests sent by the user node are within the preset range, an unauthorized user node can be effectively prevented from obtaining a corresponding service through authentication.

With reference to the third aspect, in some implementations of the third aspect, the authentication request further includes first identification information. The second anonymous identity information includes information about a user vehicle, and the first identification information includes identification information of a charging pile and identification information of a charge service provider CSP node to which the charging pile belongs. The charging pile is a charging pile to which the user vehicle is connected. After identity authentication succeeds, the transceiver module is further configured to send indication information to the CSP node, where the indication information indicates the CSP node to provide a charge service for the user vehicle by using the charging pile.

With reference to the third aspect, in some implementations of the third aspect, the authentication request further includes a first random number, the first random number is a random number obtained by the user node from the charging pile. Before the transceiver module is further configured to send the indication information to the CSP node, the transceiver module is further configured to request a random number of the charging pile from the CSP node; the transceiver module is further configured to receive a second random number from the CSP node, where the second random number is a random number used before the random number of the charging pile is updated; and the processing module is further configured to determine that the first random number matches the second random number.

In a possible implementation, if the first random number does not match the second random number, identity authentication on the user node fails.

In this embodiment of this application, whether the first random number in the authentication request sent by the user node matches the second random number obtained from the charging pile is determined, so that the replay attack can be effectively defended against, thereby further improving security of a user identity authentication process. For example, the authorized user node A sends the second anonymous identity information of the user node A and the first identification information to the smart contract of the blockchain in the authentication process, and the unauthorized user node B is also on the blockchain. The unauthorized user node B intercepts the second anonymous identity information of the authorized user node A, the first identification information, and the first random number by forging an address, and the unauthorized user node B may obtain the charge service through authentication based on the intercepted information about the authorized user node A. After the user vehicle obtains a random number of the charging pile, the random number of the charging pile is updated. Therefore, if the blockchain verifies whether the first random number in the authentication request of the user node is correct after authenticating the second anonymous identity information of the user node and the first identification information, an unauthorized user node can be effectively prevented from obtaining the charge service through authentication, and security in a user identity authentication process is further improved.

With reference to the third aspect, in some implementations of the third aspect, the transceiver module is further configured to: receive revenue information that is of the CSP node and that is sent by the user node; and update an account balance of the CSP node based on the revenue information.

In this embodiment of this application, the CSP node that provides the charge service updates a charging revenue on the blockchain through the smart contract, and does not directly charge through the user node. Therefore, the CSP node cannot learn of a charging pile from which the charging revenue comes. This avoids a malicious CSP from estimating driving privacy of the user vehicle by using the charging pile and a charging fee, and further improves privacy security of the user.

With reference to the third aspect, in some implementations of the third aspect, the revenue information is revenue information encrypted by using an additive homomorphic public key of the CSP node.

In this embodiment of this application, the revenue information is encrypted by using an additive homomorphic public key of the CSP node, and this improves revenue privacy security of the CSP node that provides the charge service.

With reference to the third aspect, in some implementations of the third aspect, before the transceiver module is further configured to receive the authentication request from the user node, the transceiver module is further configured to receive first information sent by the user node, where the first information includes a third random number, and the third random number is a random number corresponding to the first anonymous identity information; the transceiver module is further configured to send second information to a vehicle management node, where the second information includes the third random number; the transceiver module is further configured to receive the first anonymous identity information determined by the vehicle management node based on the third random number; and the processing module is further configured to store a correspondence between an identifier of the user node and the first anonymous identity information in the smart contract of the blockchain, where the identifier of the user node is generated by the blockchain when the user node accesses the blockchain.

In a possible implementation, the receiving the first anonymous identity information determined by the vehicle management node based on the third random number includes: The first anonymous identity information is first anonymous identity information encrypted by using a private key of the vehicle management node. If the encrypted first anonymous identity information is successfully decrypted by the blockchain, a correspondence between an identifier of the user node and the first anonymous identity information is stored in the smart contract of the blockchain.

In this embodiment of this application, the vehicle management node stores the anonymous user identity information and vehicle information in the smart contract based on the third random number. This not only can ensure that user privacy is not leaked in a charge service authentication process, but also can prevent a malicious user from tampering with the anonymous identity information, to ensure authenticity and validity of the anonymous user identity information and the vehicle information.

According to a fourth aspect, an identity authentication apparatus is provided. The apparatus is used in a user node, and the apparatus includes a processing module and a transceiver module. The processing module is configured to determine an authentication request, where the authentication request includes second anonymous identity information. The transceiver module is configured to send the authentication request to a blockchain that supports a smart contract, where the second anonymous identity information is associated with identity information of the user node.

It should be understood that the second anonymous identity information is associated with the identity information of the user node, that is, to-be-authenticated second anonymous identity information is associated with the identity information of the user node. The second anonymous identity information is used by the blockchain that supports the smart contract to determine whether identity authentication on the user node succeeds.

It should be noted that performing the foregoing method by the blockchain that supports the smart contract may be understood as that the smart contract on the blockchain implements the foregoing method, and the foregoing method may be implemented by running a segment of program code on the blockchain.

In this embodiment of this application, first anonymous identity information stored in the smart contract on the blockchain that supports the smart contract is compared with the second anonymous identity information sent by the user node to the blockchain in the authentication process, to determine whether the identity authentication on the user node succeeds. In this way, because anonymous identity information is used in an identity authentication process, privacy information of a user is not leaked, which helps improve security of user identity authentication.

With reference to the fourth aspect, in some implementations of the fourth aspect, the processing module is further configured to encrypt the second anonymous identity information by using a private key of the user node.

In this embodiment of this application, the authentication request is encrypted by using the private key of the user node, so that security in an authentication request transmission process can be improved, and authenticity and non-forgery of the authentication request sent by the user node can be ensured.

With reference to the fourth aspect, in some implementations of the fourth aspect, the authentication request may further include a first timestamp, and the first timestamp is associated with determining time of the authentication request.

It should be understood that the first timestamp is used by the processing module of the blockchain to determine whether the first timestamp is within a preset time range before determining whether identity authentication on the user node succeeds.

In this embodiment of this application, it is determined whether a timestamp of the authentication request sent by the user node is within the preset range, so that a replay attack can be effectively defended against, thereby improving security of a user identity authentication process. For example, an authorized user node A sends the second anonymous identity information of the user node A and the first identification information to a smart contract of the blockchain in an authentication process, and an unauthorized user node B is also on the blockchain. The unauthorized user node B intercepts the second anonymous identity information and the first identification information of the authorized user node A by forging an address, and the unauthorized user node B may obtain a corresponding service through authentication based on the intercepted information of the authorized user node A. Before authenticating the second anonymous identity information and the first identification information, if the blockchain first checks that timestamps of the authentication requests sent by the user node are within the preset range, an unauthorized user node can be effectively prevented from obtaining a corresponding service through authentication.

With reference to the fourth aspect, in some implementations of the fourth aspect, the authentication request further includes first identification information, and the second anonymous identity information includes information about a user vehicle. The processing module is further configured to obtain the first identification information from a charging pile. The first identification information includes identification information of the charging pile and identification information of a charge service provider CSP node to which the charging pile belongs, and the charging pile is a charging pile to which the user vehicle is connected.

It should be understood that the first identification information is used by the blockchain to indicate the CSP node to provide a charge service for the user vehicle by using the charging pile.

With reference to the fourth aspect, in some implementations of the fourth aspect, that the processing module is further configured to obtain first identification information from a charging pile includes: The processing module is further configured to display a plurality of to-be-selected CSP nodes in a charge service application in response to a CSP node obtaining operation of the user; the processing module is further configured to display a plurality of to-be-selected charging piles in the charge service application in response to a CSP node selection operation of the user; and the processing module is further configured to obtain the first identification information in response to a charging pile selection operation of the user.

In this embodiment of this application, the user node may select, from the charge service app, charge services provided by different charge service providers, so that redundancy of apps that have a same charge service function and that are of the user node can be effectively reduced.

With reference to the fourth aspect, in some implementations of the fourth aspect, the authentication request may further include a first random number. The determining an authentication request further includes: The processing module is further configured to obtain the first random number based on the first identification information, where the first random number is at least used to identify effectiveness of obtaining the charge service by the user vehicle.

It should be understood that the first random number is at least used to identify the effectiveness of obtaining the charge service by the user vehicle, that is, the first random number is at least used by the blockchain to indicate whether the charging pile provides the charge service for the user vehicle.

With reference to the fourth aspect, in some implementations of the fourth aspect, the transceiver module is further configured to send revenue information that is of the CSP node and that is received from the charging pile, where the revenue information is used to update an account balance of the CSP node.

In this embodiment of this application, the CSP node that provides the charge service updates a charging revenue on the blockchain through the smart contract, and does not directly charge through the user node. Therefore, the CSP node cannot learn of a charging pile from which the charging revenue comes. This avoids a malicious CSP from estimating driving privacy of the user vehicle by using the charging pile and a charging fee, and further improves privacy security of the user.

With reference to the fourth aspect, in some implementations of the fourth aspect, the revenue information is revenue information encrypted by using an additive homomorphic public key of the CSP node.

In this embodiment of this application, the revenue information is encrypted by using an additive homomorphic public key of the CSP node, and this improves revenue privacy security of the CSP node that provides the charge service.

With reference to the fourth aspect, in some implementations of the fourth aspect, before sending the authentication request to the blockchain that supports the smart contract, the transceiver module is further configured to receive a third random number from a vehicle management node, where the third random number is a random number corresponding to first anonymous identity information; and the transceiver module is further configured to send first information to the blockchain, where the first information includes the third random number.

It should be understood that the third random number is at least used by the blockchain to obtain the first anonymous identity information from a vehicle management node.

In this embodiment of this application, the vehicle management node stores the anonymous user identity information and vehicle information in the smart contract based on the third random number. This not only can ensure that user privacy is not leaked in a charge service authentication process, but also can prevent a malicious user from tampering with the anonymous identity information, to ensure authenticity and validity of the anonymous user identity information and the vehicle information.

According to a fifth aspect, an identity authentication apparatus is provided, including an input/output interface, a processor, and a memory. The processor is configured to control the input/output interface to receive and send a signal or information, the memory is configured to store a computer program, and the processor is configured to invoke and run the computer program from the memory, so that a device authentication apparatus performs the identity authentication method according to any one of the first aspect or the possible implementations of the first aspect; and/or performs the identity authentication method according to any one of the second aspect or the possible implementations of the second aspect.

The identity authentication apparatus may be used in a scenario in which identity validity authentication needs to be performed and storage space is limited. For example, the identity authentication apparatus may be used for user identity authentication in an electric vehicle charge service, or may be used for user identity authentication in a vehicle OTA upgrade, or may be used for user identity authentication in an automobile insurance service. This is not limited in this application.

According to a sixth aspect, an identity authentication system is provided, including a blockchain that supports a smart contract and that is configured to perform the identity authentication method according to any one of the first aspect or the possible implementations of the first aspect, and a user node that is configured to perform the identity authentication method according to any one of the second aspect or the possible implementations of the second aspect.

According to a seventh aspect, a vehicle-mounted component is provided, including a user node configured to perform the identity authentication method according to any one of the second aspect or the possible implementations of the second aspect.

According to an eighth aspect, a vehicle is provided, including an electronic control unit, where the electronic control unit is configured to perform the identity authentication method according to any one of the second aspect or the possible implementations of the second aspect.

According to a ninth aspect, a computer-readable storage medium is provided, including instructions. The instructions are used to: implement the identity authentication method according to any one of the first aspect or the possible implementations of the first aspect; and/or implement the identity authentication method according to any one of the second aspect or the possible implementations of the second aspect.

According to a tenth aspect, a computer program product is provided, including a computer program. When the computer program is run, a computer is enabled to: perform the identity authentication method according to any one of the first aspect or the possible implementations of the first aspect; and/or perform the identity authentication method according to any one of the second aspect or the possible implementations of the second aspect.

According to an eleventh aspect, a computing device is provided, including at least one processor and a memory, where the at least one processor is coupled to the memory, and is configured to read and execute instructions in the memory, to perform the identity authentication method according to any one of the first aspect or the possible implementations of the first aspect; and/or perform the identity authentication method according to any one of the second aspect or the possible implementations of the second aspect.

According to a twelfth aspect, a chip is provided. The chip includes a processor and a data interface, and the processor reads, through the data interface, instructions stored in a memory, to perform the identity authentication method according to any one of the first aspect or the possible implementations of the first aspect; and/or perform the identity authentication method according to any one of the second aspect or the possible implementations of the second aspect.

Optionally, in an implementation, the chip may further include the memory. The memory stores instructions. The processor is configured to execute the instructions stored in the memory. When the instructions are executed, the processor is configured to: perform the identity authentication method according to any one of the first aspect or the possible implementations of the first aspect; and/or perform the identity authentication method according to any one of the second aspect or the possible implementations of the second aspect.

According to a thirteenth aspect, a chip system is provided. The chip system includes at least one processor, configured to support implementing functions in the first aspect or some implementations of the first aspect, for example, receiving or processing data and/or information in the foregoing method.

In a possible design, the chip system further includes a memory. The memory is configured to store program instructions and data. The memory is located inside the processor or outside the processor. The chip system may include a chip, or may include a chip and another discrete component.

## BRIEF DESCRIPTION OF DRAWINGS

FIG. 1 is a diagram of a conventional charge service system according to an embodiment of this application;

FIG. 2 is a diagram of an identity authentication method according to an embodiment of this application;

FIG. 3 is a diagram of an architecture of a blockchain-based charge service system according to an embodiment of this application;

FIG. 4 is a diagram of a blockchain-based charge service procedure according to an embodiment of this application;

FIG. 5 is a diagram of a charge service provider node initialization procedure according to an embodiment of this application;

FIG. 6 is a diagram of a vehicle management node initialization procedure according to an embodiment of this application;

FIG. 7 is a diagram of a registration procedure of a user node according to an embodiment of this application;

FIG. 8A and FIG. 8B are a diagram of another registration procedure of a user node according to an embodiment of this application;

FIG. 9 is a diagram of an authentication procedure of a charge service system according to an embodiment of this application;

FIG. 10 is a diagram of a blockchain authentication procedure according to an embodiment of this application;

FIG. 11 is a diagram of a charge service payment procedure according to an embodiment of this application;

FIG. 12(a) to FIG. 12(d) are a diagram of a human-computer interaction interface of a user node according to an embodiment of this application;

FIG. 13 is a diagram of an identity authentication apparatus according to an embodiment of this application;

FIG. 14 is a diagram of another identity authentication apparatus according to an embodiment of this application;

FIG. 15 is a diagram of another identity authentication apparatus according to an embodiment of this application; and

FIG. 16 is a diagram of another identity authentication apparatus according to an embodiment of this application.

## DESCRIPTION OF EMBODIMENTS

The following describes technical solutions of embodiments in this application with reference to accompanying drawings.

Terms used in the following embodiments are merely intended to describe specific embodiments, but are not intended to limit this application. As used in the specification of this application and the appended claims, the singular expression "a", "an", "the", "the foregoing", "such a", or "this" is intended to also include an expression "one or more" unless otherwise clearly indicated in the context. It should be further understood that in the following embodiments of this application, "at least one" and "one or more" mean one, two, or more. The term "and/or" is used for describing an association relationship between associated objects, and indicates that three relationships may exist. For example, A and/or B may represent: Only A exists, both A and B exist, and only B exists, where A and B may be singular or plural. The character "/" generally indicates an "or" relationship between the associated objects.

Reference to "an embodiment", "some embodiments", or the like described in the specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In embodiments of this application, prefix words such as "first" and "second" are used only to distinguish between different described objects, and do not limit a location, a sequence, a priority, a quantity, content, or the like of the described objects. For example, different anonymous identity information is distinguished.

In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

For ease of understanding of technical solutions of this application, concepts in this application are first briefly described.

(1) Blockchain (blockchain, BC)

The blockchain is a decentralized architecture and computing paradigm that uses a blockchain data structure to verify and store data, uses a distributed node consensus algorithm to generate and update data, uses cryptography to ensure data transmission and access security, and uses a smart contract including automation script code to program and operate data. The blockchain is a special distributed database without a central point. Information is stored in all nodes added to a blockchain network. In addition, information stored in all nodes added to the blockchain network is consistent and synchronized. If one or two nodes are faulty, the information is not lost. The information can be viewed on other nodes. The node may be a server, a notebook computer, a mobile phone, or the like.

(2) Smart contract (smart contract, SC)

The smart contract is a computer protocol intended to propagate, verify, or execute a contract in an informatization manner. The smart contract is a digital contract stored in the blockchain, and generally refers to a program running on Ethereum. Once a contract is deployed, no one can change code and a running status of the contract, and this ensures fairness, correctness, and privacy. When a preset condition is met, the smart contract can be automatically executed.

(3) Additive homomorphic encryption algorithm

Performing an operation on a ciphertext encrypted according to the additive homomorphic encryption algorithm and then decrypting the ciphertext is equivalent to directly performing an operation on a plaintext. Additive homomorphic encryption means that a result of performing an addition operation on the plaintext is consistent with a result of performing an operation on the ciphertext and then decrypting the ciphertext.

With reference to the accompanying drawings, the following provides specific descriptions by using an example of an identity authentication process of an electric vehicle in a charge service.

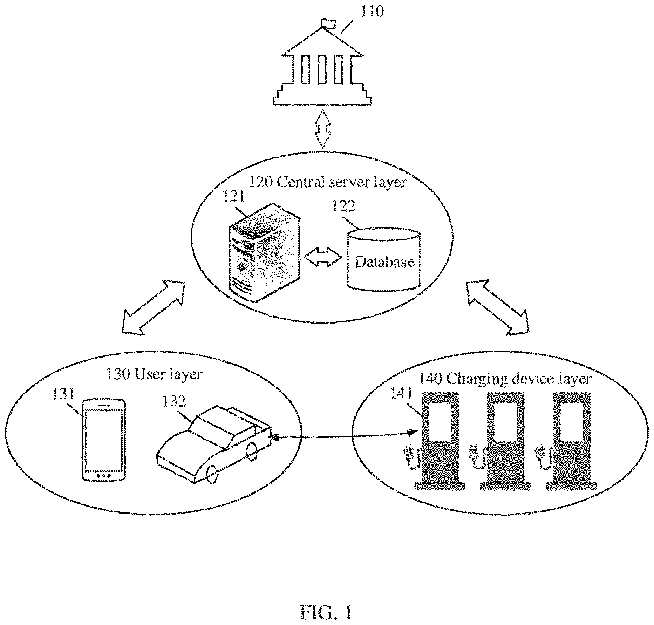

FIG. 1 is a diagram of a conventional charge service system according to an embodiment of this application. The following describes in detail a working principle of the conventional charge service system with reference to FIG. 1.

As shown in FIG. 1, the conventional charge service system includes vehicle management 110, a central server layer 120, a user layer 130, and a charging device layer 140. The vehicle management 110 is not necessary in charge service systems of some charge service providers.

For a charge service system in which the vehicle management 110 exists, the vehicle management 110 is mainly configured to verify whether user privacy information transmitted by the central server layer is authentic and valid. The charge service provider provides a charge service for a vehicle of a user only after verifying that the user privacy information is authentic and valid. The user privacy information may include information such as user identity information, a vehicle model of the user, and a vehicle license plate of the user. It should be noted that the vehicle management 110 herein may represent a device having an information authentication function in a vehicle management office. The device may be used to verify whether the user privacy information is authentic and valid. The device having the information authentication function is not specifically limited herein.

For a charge service system in which the vehicle management 110 does not exist, the charge service provider does not verify authenticity and validity of the user privacy information, but verifies only information registered by the user with the charge service provider. After the verification succeeds, the charge service provider may provide a charge service for the vehicle of the user.

The central server layer 120 includes a cloud server 121 and a database 122. The cloud server 121 is mainly configured to implement functions such as user management, user information authentication, charging settlement, and data transmission. The database 122 is mainly configured to store data such as the user identity information and user account balance information.

The user layer 130 includes a client 131 and a user vehicle 132. The user vehicle 132 is a service object of the charge service system. The client 131 may enable a vehicle owner to access various charge service systems through an application, a web page, an applet, or the like. The client 131 mainly communicates with the cloud server 121 to implement user identity information authentication and settlement tasks. It should be noted that each charge service provider may have a corresponding client 131.

The charging device layer 140 includes a plurality of charging devices 141 used by each charge service provider for a charge service.

The following describes in detail the working principle of the conventional charge service system by using an example in which a charge service provider A is used and the vehicle management 110 exist.

First, the user uploads, through the client 131, the user identity information and vehicle information to a charge service system corresponding to the charge service provider A for registration. The cloud server 121 stores the information in the data 122, and the cloud server 121 sends the information to the vehicle management 110 to verify authenticity and validity of a user identity. After the verification succeeds, the user completes registration.

Second, the user connects the user vehicle 132 to the charging device 141 through a physical connection. The user initiates a charge service request by scanning a QR code on the charging device 141, or the user manually enters a unified identification number of the charging device 141 on the client 131 to initiate a charge service request.

Then, the cloud server 121 performs identity authentication on the user initiating the charge service request. After the identity authentication succeeds, the cloud server 121 sends charging start information to the charging device 141, so that the charging device 141 charges the user vehicle 132.

Finally, after charging of the user vehicle is completed, the charging device 141 sends charging completion information to the cloud server 121, and the cloud server 121 performs charging fee settlement, and sends a specific charging fee amount to the client 131 of the user, to complete the charge service.

The foregoing process is a general process of a current charge service system, and different charge service providers have corresponding clients. Therefore, when using charging devices of different charge service providers, the user needs to download and register different applications, which causes the user to have a large quantity of redundant applications with a same function, and affects user experience.

For example, the electric vehicle of the user uses a charging pile of the charge service provider A at a place A. In this case, an application app corresponding to the charge service provider A is downloaded. When the electric vehicle of the user travels to a place B and needs to be charged by using a charging pile of a charge service provider B, an app corresponding to the charge service provider B needs to be downloaded. As a result, the user uses too many apps with a same function.

Currently, there are a plurality of methods for the cloud server 121 to perform identity authentication on the user initiating the charge service request. For example, (1) the cloud server 121 performs identity authentication by pre-assigning a pseudonym and a key; (2) the charging device 141 and the user vehicle 132 perform identity authentication; or (3) the cloud server 121 and the client 131 of the user perform identity authentication by using a ring signature or a blind signature.

(1) That the cloud server 121 performs identity authentication by pre-allocating a pseudonym and a key in a user registration phase is specifically that the cloud server 121 pre-generates a plurality of pseudonyms and keys, and sends the plurality of pseudonyms and keys to the client 131 and the charging device 141, to reduce calculation costs of identity authentication. However, the user privacy information is still stored in the database 122 at the central server layer 120 in a plaintext form, and this identity authentication manner still has a risk of disclosing user privacy.

(2) That the charging device 141 and the user vehicle 132 perform identity authentication is specifically that the charging device 141 has a computing capability, the charging device 141 is used as a relay device of the user vehicle 132 and the cloud server 121. Each time charging is performed, the charging device 141 and the user vehicle 132 exchange information for a plurality of times, to generate a symmetric key, to perform identity authentication. Because authentication information is still stored in the database 122 at the central server layer 120 in a plaintext form, this identity authentication manner also has a risk of disclosing user privacy.

(3) That the cloud server 121 and the client 131 of the user perform identity authentication by using a ring signature or a blind signature is specifically that the authentication information is encrypted by using the ring signature and the blind signature between the cloud server 121 and the client 131 of the user, so that it is ensured that the authentication information is transmitted in ciphertext and is not disclosed when the user identity authentication is performed. In this identity authentication manner, the client 131 of the user and the cloud server 121 need to perform a large quantity of operations to implement identity authentication. In addition, the authentication information is still stored in the database 122 at the central server layer 120 in a plaintext form. Therefore, this identity authentication manner also has a risk of disclosing user privacy.

In conclusion, both the current centralized charge service system and the current identity authentication manner depend on the cloud server and the user client to directly or indirectly perform identity authentication for a plurality of times. Because the cloud server stores the user privacy information in the plaintext form, if an authentication system crashes due to an attack on the cloud server, a large amount of user privacy information is leaked. In addition, different charge service providers have corresponding clients and cloud servers. This causes a risk of disclosing the user privacy information when the user uses redundant applications with a same function that are caused by different CSPs.

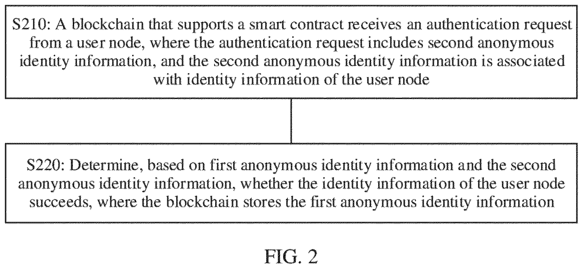

To resolve the foregoing problem, embodiments of this application provide an identity authentication method, apparatus, and system. The following provides specific descriptions with reference to FIG. 2 to FIG. 12(d).

FIG. 2 is a diagram of an identity authentication method according to an embodiment of this application.

S210: A blockchain that supports a smart contract receives an authentication request from a user node, where the authentication request includes second anonymous identity information, and the second anonymous identity information is associated with identity information of the user node.

It should be understood that the user node is a user client that accesses, in a form of a node, the blockchain that supports the smart contract. The user node may be any user end device that accesses the blockchain, for example, a smart mobile device of a user or a human-computer interaction device on a user vehicle. This is not limited in embodiments of this application.

It should be understood that, that a blockchain that supports a smart contract receives an authentication request from a user node means that the blockchain receives the authentication request from the user node through the smart contract. Specifically, for example, a server or a mining rig that is used as a computing node in the blockchain receives the authentication request from the user node through the smart contract. The smart contract in the blockchain that supports the smart contract is a program running on Ethereum, and the smart contract may have another name. This is not limited in embodiments of this application.

S220: The blockchain that supports the smart contract determines, based on first anonymous identity information and the second anonymous identity information, whether identity authentication on the user node succeeds, where the smart contract of the blockchain stores the first anonymous identity information.

It should be understood that the first anonymous identity information stored in the smart contract of the blockchain is anonymous identity information generated by an authoritative organization based on real information of the user when the user is authenticated by the authoritative organization.

For example, in an electric vehicle charge service, a vehicle management office, serving as the authoritative organization, generates the first anonymous identity information based on real information (for example, an identity card number of the user, a phone number, vehicle license plate information registered by the user, a vehicle model, and annual inspection information) of an authorized user. During OTA upgrade, the authoritative organization may also be the vehicle management office, to generate the first anonymous identity information.

In a possible implementation, if the first anonymous identity information matches the second anonymous identity information, the identity authentication on the user node succeeds.

For example, if the first anonymous identity information is the same as the second anonymous identity information, the identity authentication on the user node succeeds.

In a possible implementation, if the first anonymous identity information does not match the second anonymous identity information, the identity authentication on the user node fails.

For example, if the first anonymous identity information is different from the second anonymous identity information, the identity authentication on the user node succeeds.

In this embodiment of this application, the first anonymous identity information stored in the smart contract is compared with the second anonymous identity information that is sent by the user node to the blockchain in an authentication process, to determine whether the identity authentication on the user node succeeds. In this way, because anonymous identity information is used in an identity authentication process, privacy information of a user is not leaked, which helps improve security of user identity authentication. In addition, any node that has a computing capability on the blockchain can provide computing power for execution of the smart contract. Therefore, compared with an authentication process of a centralized server, an identity authentication process based on the blockchain can reduce computing pressure and storage pressure of a server used for identity authentication to some extent.

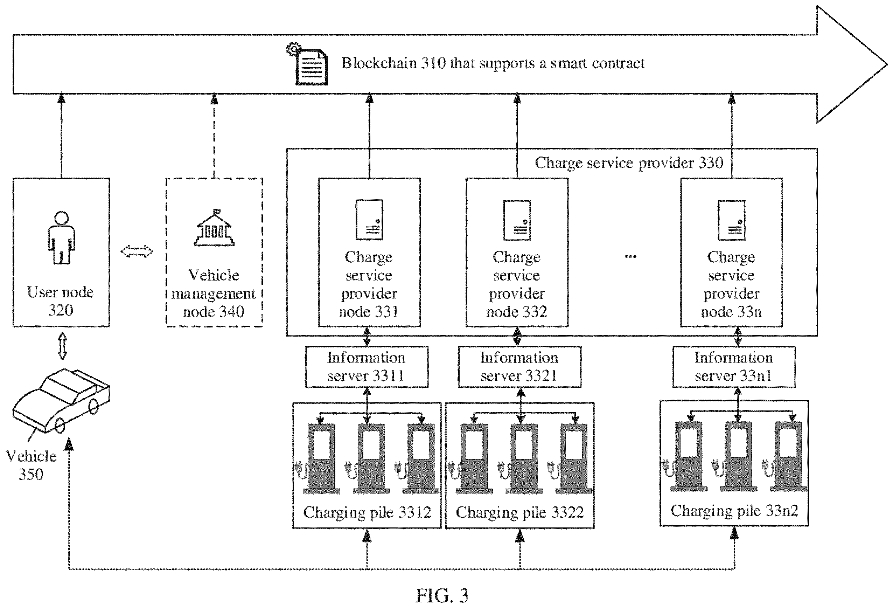

With reference to FIG. 3 to FIG. 14, the following describes in detail implementations of the identity authentication method, apparatus, and system in an electric vehicle charge service scenario.

FIG. 3 is a diagram of an architecture of a blockchain-based charge service system according to an embodiment of this application.

In this embodiment of this application, as shown in FIG. 3, the blockchain-based charge service system includes a blockchain 310 that supports a smart contract, a user node 320, and a charge service provider CSP 330. The charge service provider 330 includes charge service provider nodes 331 to 33n (where n is a positive integer). Optionally, the charge service system may further include a vehicle management DMV node 340.

The user node 320 accesses the blockchain 310 that supports the smart contract, and participates in execution of the smart contract to implement registration, authentication, and fee payment of a charge service. For example, the user node 320 may access, through a front-end interface, the blockchain 310 that supports the smart contract, for example, access the blockchain 310 that supports the smart contract through a front end constructed by using web3.js. A manner in which the user node 320 accesses the blockchain that supports the smart contract is not limited in embodiments of this application. The user node 320 is connected to a vehicle 350 of a user, where the vehicle of the user is a charging object of the charge service system.

It should be noted that the user node 320 may be connected to the vehicle 350 of the user through wired communication or wireless communication. When the user node 320 is a vehicle built-in device (for example, a vehicle smart tablet), the user node 320 may be connected to the vehicle 350 of the user through wired communication (for example, a CAN bus or a LIN bus). When the user node 320 is a user mobile terminal device (for example, a smartphone or a tablet), the user node 320 is connected to the vehicle 350 of the user through wireless communication. This is not limited in embodiments of this application.

The charge service provider nodes 331 to 33n access the blockchain 310 that supports the smart contract, and participate in execution of the smart contract, to complete authentication on the charge service. It should be noted that different CSP nodes 331 to 33n may be used as charge service providers of a user vehicle, and each CSP node is connected to a charging pile of the CSP node respectively, to implement communication between the CSP node and the charging pile of the CSP node. The CSP node may communicate with the charging pile by using a conventional primary/secondary structure. For example, the CSP node 331 may be connected to a plurality of charging piles 3312 through an information server 3311. A communication mode between the CSP node and a corresponding charging pile is not limited in embodiments of this application. The start, stop, and settlement of charging piles are controlled by the smart contract through the CSP node.

It should be noted that the user node 320 may obtain charge services of different CSP nodes, and each charge service is performed by using a CSP node to which a charging pile connected to the vehicle 350 of the user belongs.

The charging pile is connected to the vehicle 350, and is configured to provide a power source for the vehicle 350. A manner of connecting the charging pile to the vehicle 350 is not limited in embodiments of this application.

For example, vehicle management is an official authority. A related server in the vehicle management may be used as the vehicle management node 340 to access the blockchain 310 that supports the smart contract. The vehicle management node is configured to store user identity information and vehicle information registered with the user.

For example, in another blockchain-based charge service system, charging piles of different CSP nodes may be used as nodes in the blockchain 210 for access. The blockchain of the charge service system includes a user node 220 and different charging pile nodes.

For brevity of description, the "vehicle management node" is briefly referred to as a "DMV node", the "charge service provider node" is briefly referred to as a "CSP node", and the "blockchain that supports the smart contract" is briefly referred to as a "blockchain" below. It should be noted that all blockchains in embodiments of this application support the smart contract. However, a specific type of a blockchain is not limited in embodiments of this application. For example, the blockchain may be a consortium blockchain, a public chain, or a private chain.

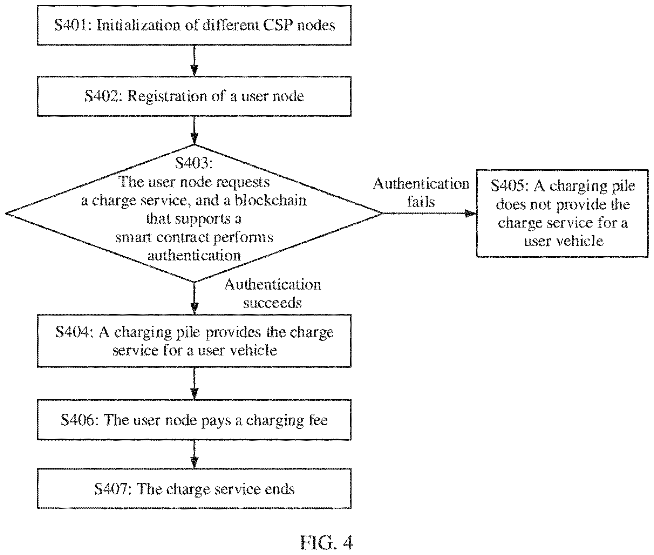

The foregoing content describes in detail an architecture of a blockchain-based charge service system provided in an embodiment of this application. The following describes in detail a blockchain-based charge service procedure with reference to FIG. 4.

FIG. 4 is a diagram of a blockchain-based charge service procedure according to an embodiment of this application. An entire charge service procedure is divided into an initialization phase of a charge service system, an authentication and charging phase of the charge service system, and a charging and payment phase of the charge service system. The following describes the blockchain-based charge service procedure in an overall manner with reference to FIG. 4 to FIG. 12(d).

S401: Different CSP nodes access a blockchain, to complete the initialization phase of the charge service system.

A first CSP node is used as an example. The first CSP node accesses the blockchain, and a correspondence between an on-chain identifier of the first CSP node and a public key of the first CSP node is stored in a smart contract of the blockchain, so that the blockchain can obtain the public key of the first CSP node through the on-chain identifier of the first CSP node.

In a possible implementation, the on-chain identifier of the first CSP node is identity information corresponding to the first CSP node on the blockchain. For example, the on-chain identifier of the first CSP node may be an on-chain address of the first CSP node, or may be a hash value generated based on an on-chain address of the first CSP node. A specific form of the on-chain identifier of the first CSP node is not limited in embodiments of this application.

In a possible implementation, the correspondence between the on-chain identifier of the first CSP node and the public key of the first CSP node may be a mapping relationship between the on-chain identifier of the first CSP node and the public key of the first CSP node, or may be an array correspondence between the on-chain identifier of the first CSP node and the public key of the first CSP node. The correspondence that is stored in the smart contract and that is between the on-chain identifier of the first CSP node and the public key is not limited in embodiments of this application.

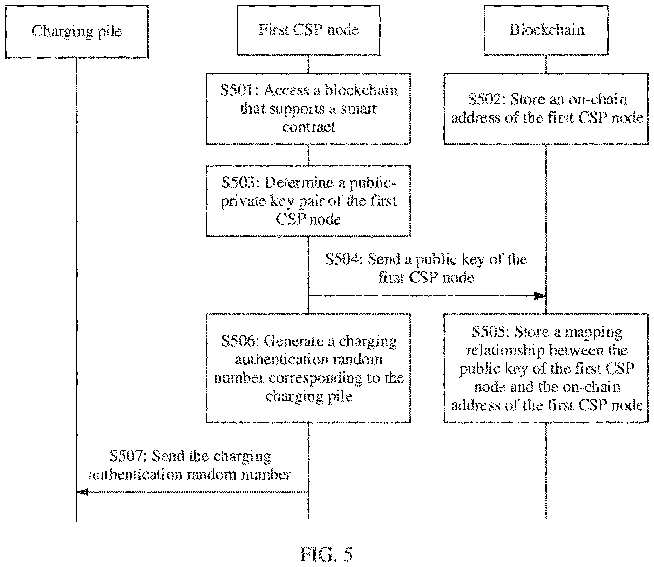

For example, FIG. 5 is a diagram of a charge service provider node initialization procedure according to an embodiment of this application. In FIG. 5, an example in which an on-chain identifier of a first CSP node is an on-chain address of the first CSP node, and the on-chain identifier of the first CSP node and a public key of the first CSP node are stored in a smart contract in a mapping form is used for description.

S501: The first CSP node accesses a blockchain that supports the smart contract. A specific manner in which the first CSP node accesses the blockchain is not limited in embodiments of this application. Different blockchains have different access manners, for example, through a genesis block, a geth console, or a wallet.

S502: Store the on-chain address of the first CSP node in the smart contract of the blockchain, where the on-chain address is denoted as CSP1_Address.

In a possible implementation, the on-chain address of the first CSP node is stored in the smart contract by using an address array. A manner of storing the on-chain address of the first CSP node is not limited in embodiments of this application.

S503: The first CSP node determines a public-private key pair of the first CSP node, where the public key of the first CSP node is denoted as CSP1_Public_Key, and a private key of the first CSP node is denoted as CSP1_Private_Key.

It should be understood that the private key of the first CSP node is used by the first CSP node to sign sent information and decrypt received information by the first CSP node. The public key of the first CSP node is used by another node in the blockchain to encrypt information sent to the first CSP node and unsigncrypt the information sent by the first CSP node.

In a possible implementation, the first CSP node generates the public-private key pair of the first CSP node under a chain.

In a possible implementation, the first CSP node obtains the public-private key pair of the first CSP node from a certificate authority (certificate authority, CA), and the first CSP node may alternatively obtain the public-private key pair of the first CSP node from another key generation authority. A key issuance authority is not limited in embodiments of this application.

It should be noted that there is no specific execution sequence between S502 and S503, and S502 and S503 may be completed simultaneously, or S502 may be completed first, or S503 may be completed first.

S504: The blockchain obtains the public key of the first CSP node.

In a possible implementation, the first CSP node sends the public key of the first CSP node to the blockchain by invoking the smart contract.

In a possible implementation, the blockchain obtains the public key of the first CSP node from the CA through the smart contract.

S505: The blockchain stores the public key of the first CSP node and the on-chain address of the first CSP node in the smart contract in a mapping form.

It should be understood that the blockchain may obtain the public key of the first CSP node by using the on-chain address of the first CSP node.

S506: The first CSP node generates different charging authentication random numbers for different charging piles belonging to the first CSP node, where the charging authentication random numbers are used for an authentication operation in an authentication and charging phase of a charge service system.

It should be noted that there is no specific execution sequence between S503 and S506. S503 may be performed first, or S506 may be performed first.

S507: The first CSP node sends a charging authentication random number corresponding to each charging pile to the corresponding charging pile.

In a possible implementation, the first CSP node may send, to the corresponding charging pile by using a data server in a CSP internal network, the charging authentication random number corresponding to each charging pile. A specific transmission manner is not limited in embodiments of this application.

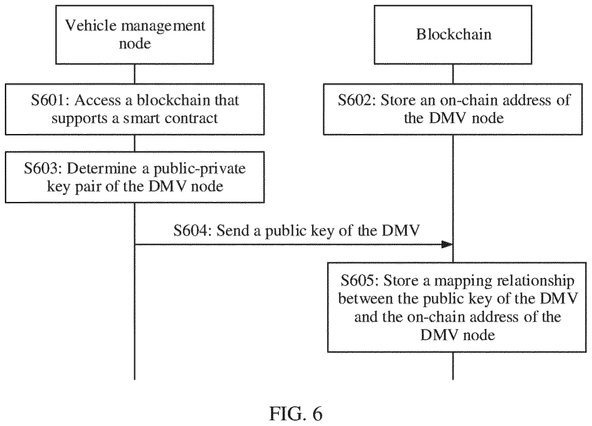

Optionally, a DMV node may also access the blockchain. After accessing the blockchain, the DMV node also needs to complete an initialization process, so that an on-chain address of the DMV node and a public key of the DMV node are stored in the smart contract in a mapping form. FIG. 6 is a diagram of a vehicle management node initialization procedure according to an embodiment of this application.

It should be noted that an initialization process of a DMV node is basically the same as an initialization process of a first CSP node. A difference lies in that the DMV node is not connected to a charging pile. Therefore, in the initialization process of the DMV node, a public key of the DMV node and an on-chain address of the DMV node are stored in the smart contract in a mapping form. Specific steps include S601 to S605. Compared with S501 to S505 in FIG. 5, a difference in the vehicle management node initialization procedure lies in that an on-chain identifier of the DMV node and a public-private key pair of the DMV node are generated. For brevity, for a detailed process, refer to the description in FIG. 5. Details are not described herein again.

S402: A user node registers with the charge service system, and a correspondence between an on-chain identifier of the user node and first anonymous identity information is stored in the smart contract of the blockchain.

In a possible implementation, the on-chain identifier of the user node is identity information corresponding to the user node on the blockchain. For example, the on-chain identifier of the user node may be an on-chain address of the user node, or may be a hash value generated based on an on-chain address of the user node. A specific form of the on-chain identifier of the user node is not limited in embodiments of this application.

In a possible implementation, a correspondence between the on-chain identifier of the user node and a public key of the user node may be a mapping relationship between the on-chain identifier of the user node and the public key of the user node, or may be an array correspondence between the on-chain identifier of the user node and the public key of the user node. The correspondence that is stored in the smart contract and that is between the on-chain identifier of the user node and the public key is not limited in embodiments of this application.

The following description is provided by using an example in which the on-chain identifier of the user node is the on-chain address of the user node, and the on-chain identifier of the user node and the public key of the user node are stored in the smart contract in a mapping form.

It should be understood that the first anonymous identity information is anonymous user identity information and vehicle information corresponding to a user. The user identity information may include user privacy information such as a user name, an age, a gender, a phone number, an identity card number, and an address. The vehicle information corresponding to the user may include information such as a license plate number, a vehicle model, and a vehicle color of a vehicle corresponding to the user. This is not limited in embodiments of this application.

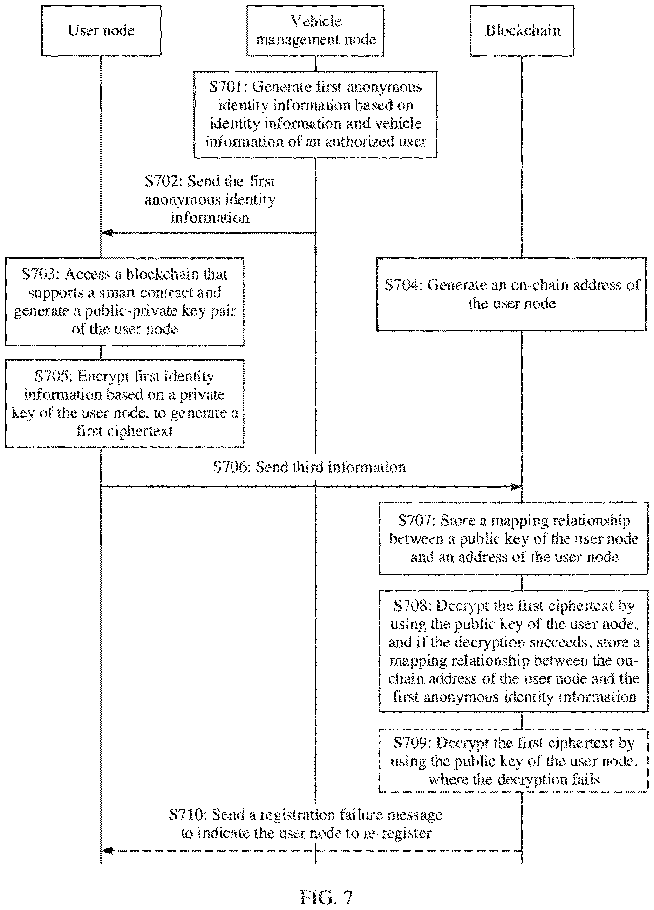

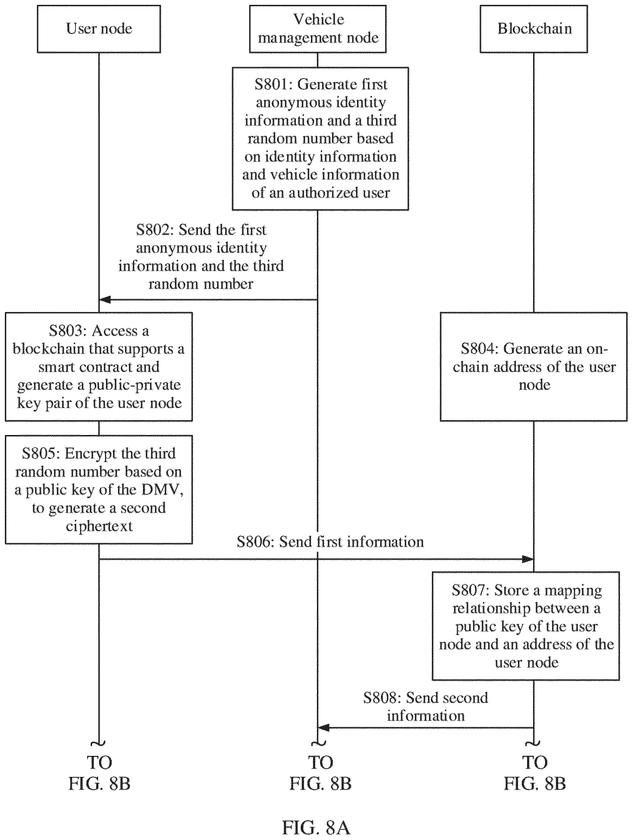

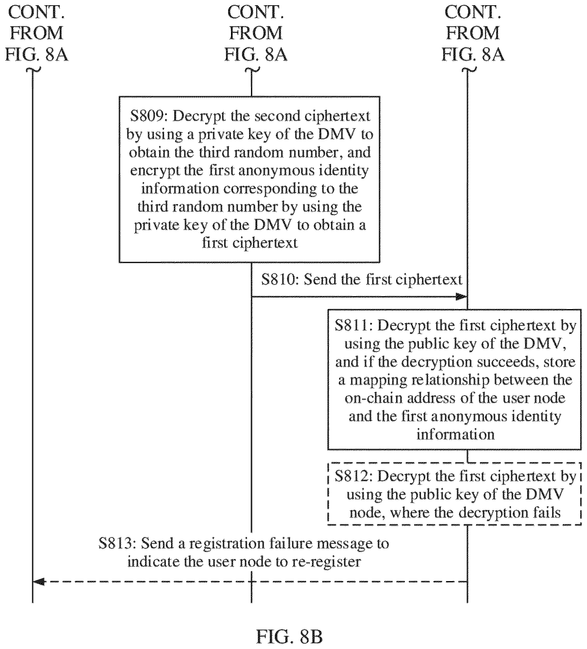

In a possible implementation, the first anonymous identity information may be anonymous information directly generated by the user node based on real identity information of the user node, or the first anonymous identity information may be anonymous information that is generated based on valid information registered by the user in a vehicle management office and that is obtained by using the DMV node. This is not limited in embodiments of this application. The following separately describes two registration processes of a user node in a charge service system with reference to FIG. 7 and FIG. 8A and FIG. 8B. In one manner, a user node stores, in a smart contract, first anonymous identity information generated by a DMV node. In the other manner, a DMV node stores, in a smart contract, first anonymous identity information generated by the DMV node.

FIG. 7 is a diagram of a registration procedure of a user node according to an embodiment of this application.

S701: A DMV node generates first anonymous identity information based on valid information registered by a user in vehicle management.

In a possible implementation, the DMV node generates the first anonymous identity information by using a salted hash value calculation method. The first anonymous identity information may be specifically a hash token. A manner of generating the first anonymous identity information is not limited in embodiments of this application.

S702: The DMV node sends the first anonymous identity information to the user node.

It should be understood that a specific manner in which the DMV node sends the first anonymous identity information to the user node is not limited in embodiments of this application, for example, may be network transmission or physical transmission.

S703: The user node accesses a blockchain, and the user node obtains a public-private key pair, where a public key of the user node is denoted as, for example, User Public_Key, and a private key of the user node is denoted as, for example, User_Private_Key.

It should be understood that, for detailed processes of a manner of obtaining a public-private key of the user node and a manner of obtaining a public-private key of the first CSP node, refer to related content of the foregoing manner of obtaining a public-private key of the first CSP node. For brevity, details are not described herein.

S704: Store an on-chain address of the user node in a smart contract of the blockchain, for example, the on-chain address is denoted as User_Address.

S705: The user node encrypts the first anonymous identity information based on the private key of the user node, to generate a first ciphertext.

It should be noted that there is no specific execution sequence between S704 and S705, and S704 and S705 may be performed simultaneously, or S704 may be performed first, or S705 may be performed first.

S706: The user node sends third information to the blockchain by invoking the smart contract.

The third information may include the first ciphertext, or may include the first ciphertext and the public key of the user node.

S707: The blockchain obtains the public key of the user node, and stores the public key of the user node and an on-chain address of a user client node in the smart contract in a mapping form.

In a possible implementation, the blockchain obtains the public key of the user node by receiving the third information sent by the user node in S706.

In a possible implementation, the blockchain obtains the public key of the user node from a CA through the smart contract.

S708: If the blockchain can successfully decrypt the first ciphertext by using the public key of the user node, the blockchain stores the on-chain address of the user client node and the first anonymous identity information in the smart contract in a mapping form.

Optionally, in S709, the blockchain fails to decrypt the first ciphertext by using the public key of the user node.

Optionally, in S710, the blockchain sends a registration failure message to the user node, to indicate the user node to re-register.

FIG. 8A and FIG. 8B are a diagram of another registration procedure of a charge service system according to an embodiment of this application. In a registration procedure of a user node shown in FIG. 7, anonymous information of a real and authorized user that is obtained by a vehicle management node is stored in a smart contract, so that authentication between a first CSP node and the user node can be completed only by using the anonymous information of the user. The first CSP node does not obtain user privacy information, and this improves user privacy security to some extent. If the user node uploads modified first anonymous identity information to the blockchain, validity of the anonymous user information is affected. In a registration procedure of a user node shown in FIG. 8A and FIG. 8B, a DMV node stores anonymous information of a real and authorized user in the smart contract, to further improve validity and authenticity of the anonymous information of the user. The following provides detailed descriptions with reference to FIG. 8A and FIG. 8B.

It should be noted that S801 to S804 are basically consistent with S701 and S704 in FIG. 7. A difference is that in S801, not only first anonymous identity information is generated, but also a third random number corresponding to the first anonymous identity information is generated. In S802, the DMV node sends both the first anonymous identity information and the third random number to the user node. Optionally, to prevent a malicious user from intercepting and performing a replay attack, after S802, the DMV node may further update the third random number corresponding to the first anonymous identity information. For brevity, for a detailed process of another step, refer to descriptions in FIG. 7. Details are not described herein again.

S805: The user node encrypts the third random number based on a public key of the DMV node, to generate a second ciphertext.

In a possible implementation, the user node may obtain the public key of the DMV node from the blockchain, or may request the public key of the DMV node from the DMV node, or in another obtaining manner. This is not limited in embodiments of this application.

S806: The user node sends first information to the blockchain by invoking the smart contract.

The first information may include the second ciphertext, or may include the second ciphertext and a public key of the user node.

S807: The blockchain obtains the public key of the user node, and the blockchain stores an on-chain address of the user node and the public key of the user node in the smart contract in a mapping form.

It should be understood that the manner of obtaining the public key of the user node in S807 is the same as that in S707. For detailed content, refer to S707. For brevity, details are not described herein again.

S808: The blockchain sends second information to the DMV node, where the second information includes the second ciphertext.

S809: The DMV node decrypts the second ciphertext based on a private key of the DMV node, to obtain the third random number, and encrypts the first anonymous identity information corresponding to the third random number by using the private key of the DMV node, to obtain a first ciphertext.

S810: The DMV node sends the first ciphertext to the blockchain by invoking the smart contract.

Steps S811 to S813 are basically the same as S708 to S710 shown in FIG. 7. A difference lies in that the first ciphertext is decrypted by using the public key of the DMV node in S811 and S812. For brevity, for a detailed process, refer to the descriptions in FIG. 7. Details are not described herein again.

In this embodiment of this application, the DMV node stores the anonymous user identity information and vehicle information in the smart contract based on the third random number. This not only can ensure that user privacy is not leaked in a charge service authentication process, but also can prevent a malicious user from tampering with the anonymous identity information, to ensure authenticity and validity of the anonymous user identity information and the vehicle information.

S403: The user node initiates a charge service request, and after receiving the charge service request of a node of a user client, the blockchain that supports the smart contract performs user identity information authentication.

S404: If the user identity information authentication succeeds, a charging pile to which the first CSP node belongs provides a charge service for a user vehicle.

S405: If the user identity information authentication fails, a charging pile to which the first CSP node belongs does not provide a charge service for a user vehicle.

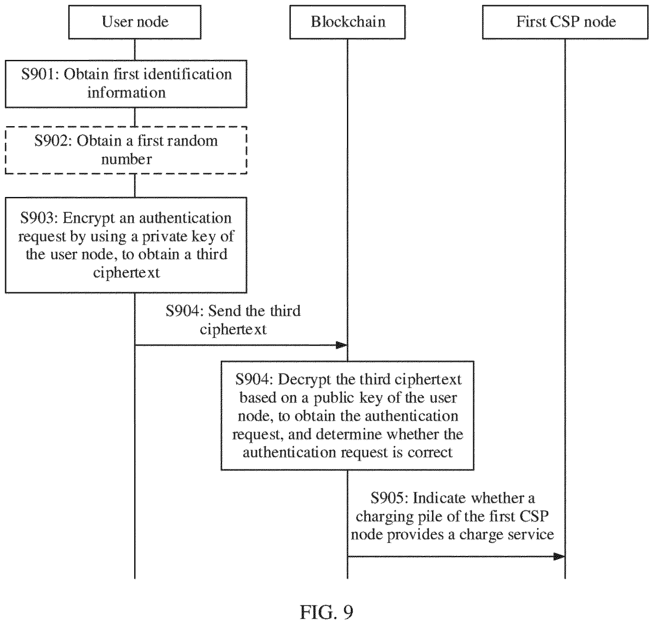

The following describes in detail a process of authenticating user identity information with reference to FIG. 9. FIG. 9 is a diagram of an authentication procedure of a charge service system according to an embodiment of this application.

S901: A user node obtains first identification information from a charging pile connected to a user vehicle, where the first identification information may be a universally unique identifier (unified identity document, UID) of the charging pile, and the first identification information includes an ID corresponding to the charging pile and an ID of a CSP node to which the charging pile belongs.

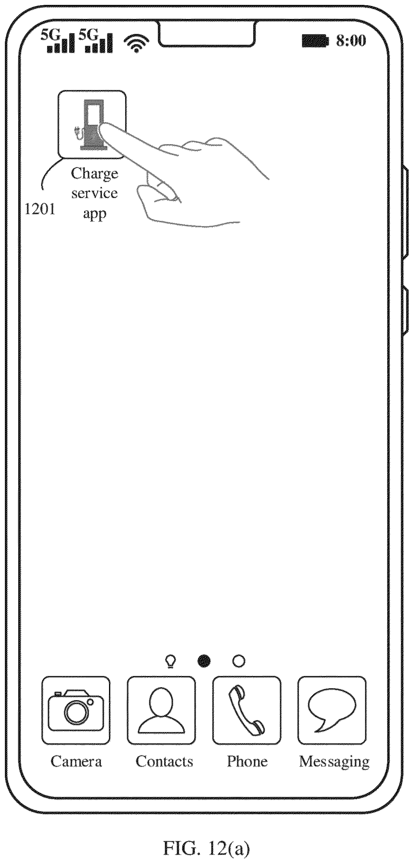

FIG. 12(a) to FIG. 12(d) are a diagram of a human-computer interaction interface according to an embodiment of this application.

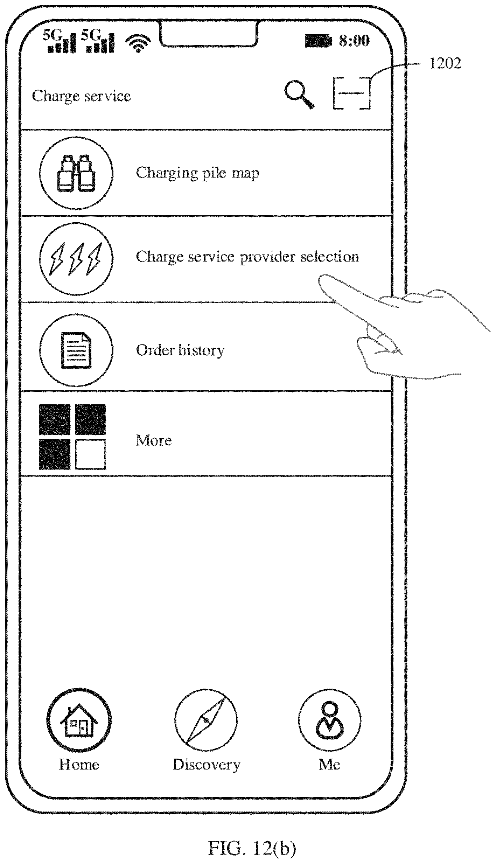

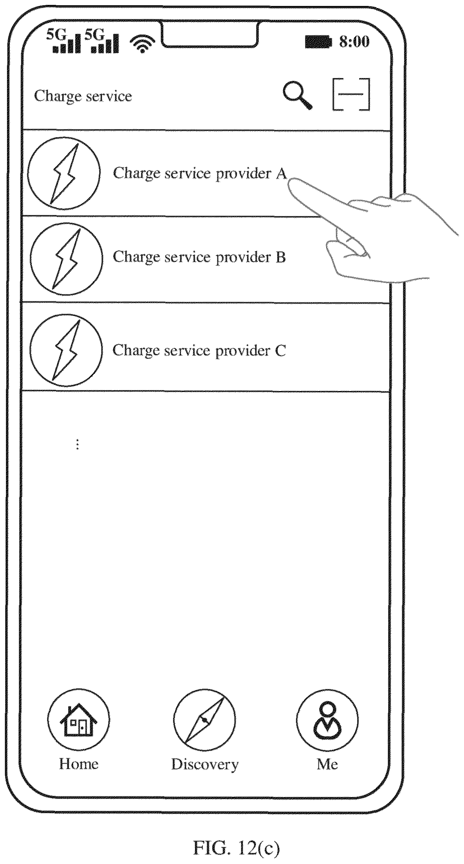

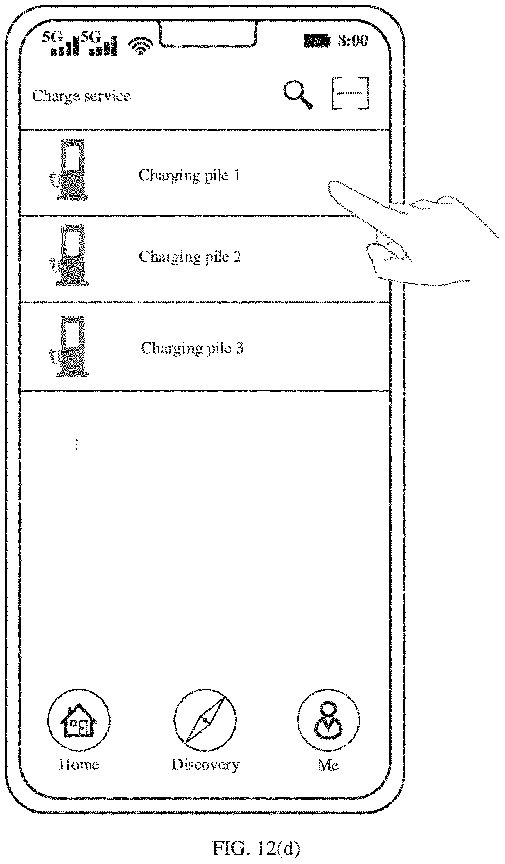

In a possible implementation, a user node opens a charge service application in response to an open operation of a charge service app (1201) of a user, as shown in FIG. 12(a). A visualized interface of the user node in FIG. 12(a) may further include another application. The user node displays a plurality of to-be-selected CSP nodes in the charge service application in response to a CSP node obtaining operation of the user, as shown in FIG. 12(b). The user node displays a plurality of to-be-selected charging piles in the charge service application in response to a CSP node selection operation of the user, as shown in FIG. 12(c). The user node responds to a charging pile selection operation of the user, to obtain first identification information, as shown in FIG. 12(d).

In this embodiment of this application, the user node may select, from the charge service app, charge services provided by different charge service providers, so that redundancy of apps that have a same charge service function and that are of the user node can be effectively reduced.

In a possible implementation, the user node identifies a QR code of the charging pile through scanning (1202) in the charge service application, to obtain the first identification information, and the user node establishes a connection to the charging pile. A wireless manner may be Bluetooth. This is not limited in this embodiment of this application.

In a possible implementation, the user manually inputs the first identification information on the charging pile into the user node.

In a possible implementation, when the user node is a vehicle built-in device, and when the charging pile is connected to a user vehicle, the charging pile sends the first identification information to the user node by using a wired connection (for example, a data transmission line in a charging line between the charging pile and the user vehicle) to the user vehicle.

Optionally, in S902, the user node obtains a first random number from the charging pile, where the first random number is a charging authentication random number corresponding to a charging pile to which the user vehicle is connected.

In a possible implementation, the user node directly obtains both the first random number and the first identification information in a manner of obtaining the first identification information in S901.

In a possible implementation, when the first identification information is manually input into the user node, the first random number may be obtained based on the first identification information.

S903: The user node encrypts an authentication request based on a private key of the user node, to obtain a third ciphertext. The authentication request may include second anonymous identity information and the first identification information, or the authentication request may include second anonymous identity information, the first identification information, and first authentication information, where the first authentication information may include a first timestamp and/or the first random number.

It should be understood that the second anonymous identity information may include identity information and vehicle information of a to-be-authenticated anonymous user, and the first timestamp is a timestamp at which the user node generates the third ciphertext.

In this embodiment of this application, the authentication request is encrypted by using the private key of the user node, so that security in an authentication request transmission process can be improved, and authenticity and non-forgery of the authentication request sent by the user node can be ensured.

S904: The user node sends the third ciphertext by invoking the smart contract, to send a charge service authentication request to a blockchain.

S905: The blockchain receives the third ciphertext, decrypts the third ciphertext based on a public key of the user node, to obtain the authentication request, and determines whether content in the authentication request is correct.

S906: The blockchain indicates, based on a determining result of the content in the authentication request in S905, whether a charging pile of a first CSP node provides a charge service for the user vehicle.

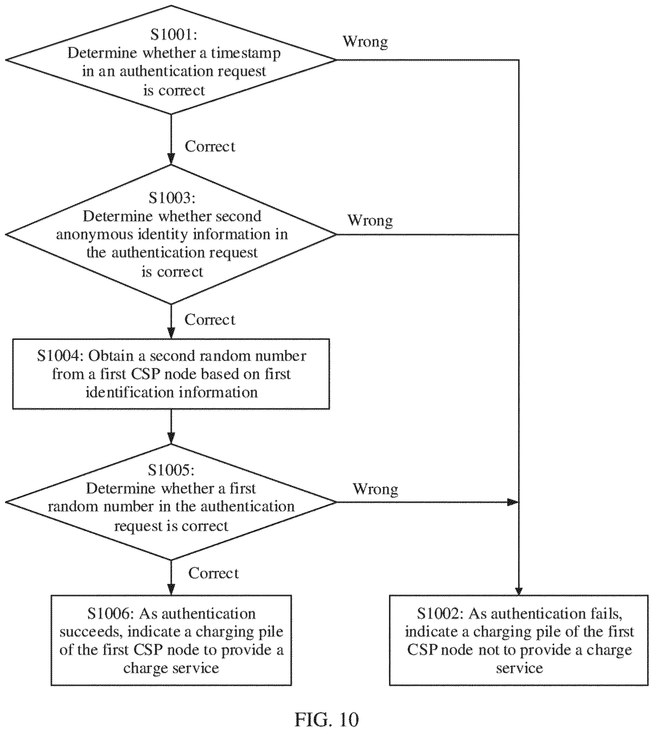

For example, specific determining processes of S905 and S906 may be shown in FIG. 10. FIG. 10 is a diagram of a blockchain authentication procedure according to an embodiment of this application. In FIG. 10, an example in which an authentication request includes second anonymous identity information, first identification information, a first timestamp, and a first random number is used for description.

S 1001: A blockchain determines whether the first timestamp is within a preset range.

In a possible implementation, the blockchain compares, based on a second timestamp of a received third ciphertext, whether a difference between the second timestamp and the first timestamp is within the preset range.

If the first timestamp is not within the preset range, S 1002 is performed.

S 1002: The blockchain indicates, based on the first identification information, a charging pile in a first CSP node corresponding to the first identification information not to provide a charge service for a user vehicle.

If the first timestamp is within the preset range, S 1003 is performed.

In this embodiment of this application, it is determined whether a timestamp of an authentication request sent by a user node is within the preset range, so that a replay attack can be effectively defended against, thereby improving security of a user identity authentication process. For example, an authorized user node A sends second anonymous identity information of the user node A and the first identification information to a smart contract of the blockchain in an authentication process, and an unauthorized user node B is also on the blockchain. The unauthorized user node B intercepts the second anonymous identity information of the authorized user node A and the first identification information by forging an address, and the unauthorized user node B may obtain a charge service through authentication based on the intercepted information of the authorized user node A. Before authenticating the second anonymous identity information and the first identification information, if the blockchain first checks that timestamps of the authentication requests sent by the user node are within the preset range, an unauthorized user node can be effectively prevented from obtaining a charge service through authentication.

S 1003: The blockchain determines whether the second anonymous identity information from the user node is correct.

In a possible implementation, the blockchain obtains first anonymous identity information from the smart contract based on an on-chain address of the user node and a mapping relationship between an address of the user node and the first anonymous identity information, and determines whether the first anonymous identity information stored in the smart contract is consistent with the second anonymous identity information decrypted from the third ciphertext.

If the first anonymous identity information is inconsistent with the second anonymous identity information, S 1002 is performed.

If the first anonymous identity information is consistent with the second anonymous identity information, S 1004 is performed.

S 1004: The blockchain obtains a second random number from the first CSP node based on the first identification information, where the second random number is a charging authentication random number obtained from the charging pile.

In a possible implementation, the blockchain may request, based on the first identification information, the charging authentication random number of the charging pile corresponding to the first identification information from the first CSP node corresponding to the first identification information, to obtain the second random number.

S1005: The blockchain determines whether the first random number in the authentication request is the same as the second random number.

If the first random number is different from the second random number, S1002 is performed.

If the first random number is the same as the second random number, S 1006 is performed.

S1006: The blockchain indicates, based on the first identification information, the charging pile in the first CSP node corresponding to the first identification information to provide a charge service.

The foregoing process is an authentication process of a blockchain-based charge service system. Authenticity and validity of the anonymous identity information of the user node and the vehicle information are authenticated, so that the charging pile provides a charge service for the vehicle. In this case, the CSP node providing the charge service does not obtain any plaintext identity information and vehicle information of the user, so that user privacy can be ensured, and user security can be improved.

Optionally, in the authentication process, to avoid a man-in-the-middle attack or a replay attack, the charging pile updates the charging authentication random number when the user node obtains the first random number of the charging pile to which the user vehicle is connected in S902.

In a possible implementation, the charging pile may send a message that the user vehicle is connected to the charging pile to the first CSP node by using a data server in an internal network. Correspondingly, the first CSP node sends the updated charging authentication random number to the charging pile based on the message that the user vehicle is connected to the charging pile.

It should be understood that if the first CSP node updates the charging authentication random number of the charging pile, the second random number obtained by the blockchain from the first CSP node in S 1004 is a random number used before the update.

In this embodiment of this application, whether the first random number in the authentication request sent by the user node matches the second random number obtained from the charging pile is determined, so that the replay attack can be effectively defended against, thereby further improving security of a user identity authentication process. For example, the authorized user node A sends the second anonymous identity information of the user node A and the first identification information to the smart contract of the blockchain in the authentication process, and the unauthorized user node B is also on the blockchain. The unauthorized user node B intercepts the second anonymous identity information of the authorized user node A, the first identification information, and the first random number by forging an address, and the unauthorized user node B may obtain the charge service through authentication based on the intercepted information about the authorized user node A. After the user vehicle obtains a random number of the charging pile, the random number of the charging pile is updated. Therefore, if the blockchain verifies whether the first random number in the authentication request of the user node is correct after authenticating the second anonymous identity information of the user node and the first identification information, an unauthorized user node can be effectively prevented from obtaining the charge service through authentication, and security in a user identity authentication process is further improved.

S406: After the charging pile completes charging, the user node pays a charging fee.

In a possible implementation, the user node directly pays the charging fee to the first CSP node in an online payment manner. The online payment manner may be that the user node performs payment through online banking, Alipay, WeChat, or the like. This is not limited in embodiments of this application.

S407: After the user node completes payment, the charge service ends.

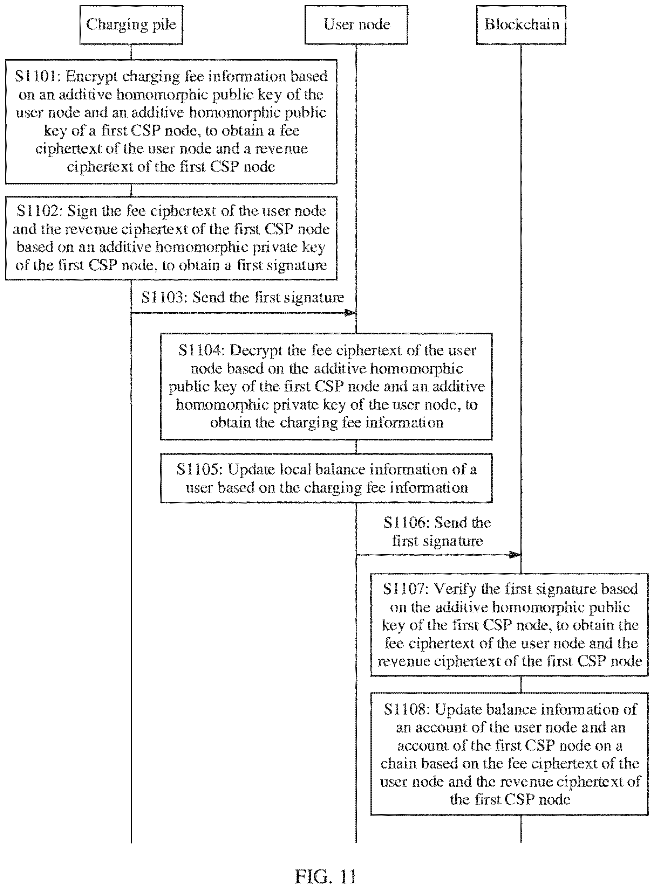

An embodiment of this application provides another blockchain-based charge service procedure. An entire charge service procedure is the same as that shown in FIG. 4. However, in a charging fee payment phase of the user node in S406, if a CSP node to which the charging pile belongs and that provides the charge service for the user vehicle is a malicious CSP node, when the user node directly pays a fee to the malicious CSP node, an endurance mileage of the user vehicle and an activity range of the user may be estimated by the malicious CSP by using a location of the charging pile and a charging amount. In this case, the driving privacy of the user vehicle is obtained by the CSP. Therefore, in embodiments of this application, the charging fee payment phase in S406 is further improved, to further improve privacy and security of driving data of the user vehicle. The following specifically describes, with reference to FIG. 11, an improvement in S406 of charging fee payment in FIG. 4, and specifically describes steps of improvement in a blockchain-based charge service procedure.

In S401, in initialization phases of different CSP nodes, a smart contract in a blockchain may further create a variable: a CSP node account, denoted as CSP_Account, for each CSP node. The CSP node account is used to store a revenue ciphertext of a CSP node.

In a possible implementation, the first CSP node is used as an example. The blockchain stores a correspondence between a first CSP node account and identification information of the first CSP node in the smart contract. For example, the first CSP node account and an address of the first CSP node are stored in the smart contract in a mapping form. A representation form of the identification information of the first CSP node is not limited in embodiments of this application, and a specific representation form of the correspondence between the first CSP node account and the identification information of the first CSP node is not limited. The following mainly uses an example in which the first CSP node account and the address of the first CSP node are stored in the smart contract in a mapping form for description.

In S401, the first CSP node generates an additive homomorphic public-private key pair of the first CSP node by using an additive homomorphic encryption algorithm, where an additive homomorphic public key of the first CSP node is denoted as CSP1 Public_Key_homomorphic and an additive homomorphic private key of the first CSP node is denoted as CSP1 Public_Key homomorphic. A type of the additive homomorphic encryption algorithm is not limited in embodiments of this application, for example, may be a Paillier additive homomorphic encryption algorithm.

In a possible implementation, the blockchain obtains, from the smart contract based on the address of the first CSP node, an additive homomorphic public key corresponding to the address of the first CSP node, and encrypts an initial value of the first CSP node account based on the additive homomorphic public key of the first CSP node, to obtain an initial ciphertext of the first CSP node account, where the initial value of the first CSP node account is 0.

In S402, in a user node registration phase, the smart contract in the blockchain may create a variable: a user node account, denoted as User_Account, for a user node. The user node account is used to store a balance ciphertext of the user node.

In a possible implementation, the blockchain stores a correspondence between a user node account and identification information of the user node in the smart contract. For example, the user node account and an address of the user node are stored in the smart contract in a mapping form. A representation form of the identification information of the user node is not limited in embodiments of this application, and a specific representation form of the correspondence between the user node account and the identification information of the user node is not limited. The following mainly uses an example in which the user node account and the address of the user node are stored in the smart contract in a mapping form for description.

In S402, the user node generates an additive homomorphic public-private key pair of the user node by using the additive homomorphic encryption algorithm, where an additive homomorphic public key of the user node is denoted as User_Public_Key_homomorphic and an additive homomorphic private key of the user node is denoted as User_Public_Key_homomorphic. A type of the additive homomorphic encryption algorithm is not limited in embodiments of this application, for example, may be a Paillier additive homomorphic encryption algorithm.

In a possible implementation, the blockchain obtains, from the smart contract based on the address of the user node, an additive homomorphic public key corresponding to the address of the user node, and encrypts an initial value of the user node account based on the additive homomorphic public key of the user node, to obtain an initial ciphertext of the user node account, where the initial value of the user node account is 0. The user node may recharge the user node account in a digital currency transfer manner, and a recharged account satisfies formula (1):

$$User\_Account = User\_Account\_initial + E\_User\_Public\_Key\_homomorphic(X) \quad (1)$$

A ciphertext value in the User_Account_initial is a value obtained after the initial value of the user node account is encrypted by using the additive homomorphic public key of the user node, X is a recharge amount of the user node, E_User_Public_Key_homomorphic(X) is a ciphertext value obtained after the recharge amount of the user node is encrypted by using the additive homomorphic public key of the user node, and User_Account' is an updated ciphertext value of the user node account.

The following specifically describes improvement of charging fee payment in S406 with reference to FIG. 11. FIG. 11 is a diagram of a charge service payment procedure according to an embodiment of this application.

S1101: A charging pile encrypts charging fee information based on an additive homomorphic public key of a user node and an additive homomorphic public key of a first CSP node, to obtain a fee ciphertext of the user node, where the fee ciphertext is denoted as Check_User, and a revenue ciphertext of the first CSP node is denoted as Check_CSP1.

In a possible implementation, the charging pile obtains the additive homomorphic public key of the user node and an additive homomorphic public-private key pair of the first CSP node through an internal network of the first CSP node to which the charging pile belongs.

For example, the first CSP node obtains the additive homomorphic public key of the user node by invoking a smart contract, and then the first CSP node sends, through a data server in the internal network, the additive homomorphic public key of the user node and the additive homomorphic public-private key pair of the first CSP node to a charging pile that is in the first CSP node and that provides a service for a user vehicle.

S1102: The charging pile signs the fee ciphertext of the user node and the revenue ciphertext of the first CSP node in S 1101 based on an additive homomorphic private key of the first CSP node, to obtain a first signature.

S 1103: The charging pile sends the first signature to the user node, and correspondingly, the user node receives the first signature.

In a possible implementation, when the user node is a user mobile terminal device, because the charging pile and the user node are wirelessly connected in a user node registration phase of the charge service, for example, connected through Bluetooth, the charging pile may send the first signature to the user node through Bluetooth. A connection manner between the user node and the charging pile is not limited in embodiments of this application.

In a possible implementation, when the user node is a built-in device in the user vehicle, because the charging pile and the user node are wirelessly connected in the user node registration phase of the charge service, for example, are connected through a data transmission line in a charging line between the charging pile and the user vehicle, the charging pile may send the first signature to the user node through the data transmission line.

S1104: The user node unsigncrypts the first signature based on the additive homomorphic public key of the first CSP node, to obtain the fee ciphertext of the user node and the revenue ciphertext of the first CSP node, and decrypts the fee ciphertext of the user node by using a homomorphic private key of the user node, to obtain the charging fee information.

In a possible implementation, the user node may obtain the additive homomorphic public key of the first CSP node by invoking the smart contract, or may directly request the additive homomorphic public key of the first CSP node from the first CSP node, or may request the additive homomorphic public key of the first CSP node from a CA. A manner in which the user node obtains the homomorphic public key of the first CSP node is not limited in embodiments of this application.

S 1105: The user node updates local user account information of the user node based on the charging fee information obtained in S 1104.

S1106: The user node sends the first signature to the smart contract in the blockchain by invoking the smart contract.

S 1107: The blockchain verifies the first signature based on the additive homomorphic public key of the first CSP node, to obtain the fee ciphertext of the user node and the revenue ciphertext of the first CSP node.

S 1108: The blockchain updates a balance ciphertext of the user node account based on the fee ciphertext of the user node, and updates a balance ciphertext of the first CSP node account based on the revenue ciphertext of the first CSP node.

In a possible implementation, the balance ciphertext of the user node account satisfies formula (2):

$$\text{User\_Account'} = \text{User\_Account} - \text{Check\_User} \qquad (2)$$

User_Account is a ciphertext value of a balance of the user node before the update, Check_User is a ciphertext value of the charging fee at this time, and User_Account' is a ciphertext value of a balance of the user node after the update.

In a possible implementation, a balance ciphertext of the first CSP node account satisfies formula (3):

$$\text{CSP1\_Account'} = \text{CSP1\_Account} + \text{Check\_CSP1} \qquad (3)$$

CSP1_Account is a ciphertext value of a balance of the first CSP node before the update, Check_CSP1 is a ciphertext value of the charging fee at this time, and CSP1_Account' is a ciphertext value of a balance of the first CSP node after the update.

In this embodiment of this application, a CSP node that provides the charge service updates a charging revenue on the blockchain in a ciphertext form through the smart contract, and does not directly charge through the user node. Therefore, a charging pile from which the charging revenue comes cannot be learned. This prevents a malicious CSP from estimating driving privacy of the user vehicle by using a charging pile and a charging fee, to further improve user privacy security. In addition, privacy security of a revenue on an on-chain account of the CSP node that provides the charge service is improved by using the revenue information through the additive homomorphic encryption. In an update process of account balance information of the user node on a chain, the fee ciphertext obtained after the additive homomorphic encryption is also used, so that privacy security of the balance of the user node on the on-chain account can be improved.

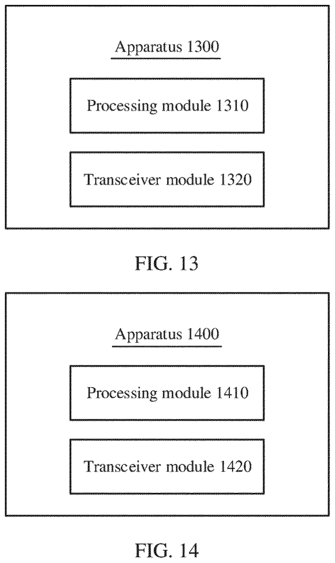

The foregoing describes in detail, with reference to FIG. 2 to FIG. 12(d), an identity authentication method provided in embodiments of this application. The following describes, with reference to FIG. 13 to FIG. 16, an identity authentication apparatus and system provided in embodiments of this application.

FIG. 13 is an identity authentication apparatus 1300 according to an embodiment of this application. The apparatus 1300 is used in a blockchain that supports a smart contract. The apparatus may be specifically any node that has a computing capability on the blockchain that supports the smart contract. The apparatus includes a processing module 1310 and a transceiver module 1320. It should be understood that the transceiver module has a data sending and/or receiving capability.

The transceiver module 1320 is configured to receive an authentication request from a user node, where the authentication request includes second anonymous identity information, and the second anonymous identity information is associated with identity information of the user node.

The processing module 1310 is configured to determine, based on first anonymous identity information and the second anonymous identity information, whether identity authentication on the user node succeeds.

Optionally, the authentication request includes the second anonymous identity information encrypted by using a private key of the user node. The processing module 1310 is further configured to decrypt the authentication request information based on a public key corresponding to the private key of the user node to obtain the second anonymous identity information.

Optionally, the authentication request may further include a first timestamp, and the processing module 1310 is further configured to determine that the first timestamp is within a preset time range.

Optionally, the authentication request further includes first identification information, the second anonymous identity information includes information about a user vehicle, the first identification information includes identification information of a charging pile and identification information of a charge service provider CSP node to which the charging pile belongs, and the charging pile is a charging pile to which the user vehicle is connected. The transceiver module 1320 is further configured to send indication information to the CSP node after identity authentication succeeds, where the indication information indicates the CSP node to provide a charge service for the user vehicle by using the charging pile.

Optionally, the authentication request may further include a first random number. The transceiver module 1320 is further configured to request a random number of the charging pile from the CSP node, and receive a second random number from the CSP node. The second random number is a random number used before the random number of the charging pile is updated. The processing module 1310 is further configured to determine that the first random number matches the second random number.

Optionally, the transceiver module 1320 is further configured to receive revenue information that is of the CSP node and that is sent by the user node, and the processing module 1310 is further configured to update an account balance of the CSP node based on the revenue information.

Optionally, before the transceiver module 1320 is configured to receive the authentication request from the user node, the transceiver module 1320 is further configured to: receive first information sent by the user node, where the first information includes a third random number, and the third random number is a random number corresponding to the first anonymous identity information; send second information to a vehicle management node, where the second information includes the third random number; and receive the first anonymous identity information determined by the vehicle management node based on the third random number. The processing module 1310 is further configured to store a correspondence between an identifier of the user node and the first anonymous identity information in the blockchain, where the identifier of the user node is generated by the blockchain when the user node accesses the blockchain.

FIG. 14 is an identity authentication apparatus 1400 according to an embodiment of this application. The apparatus 1400 is used in a user node, and the apparatus includes a processing module 1410 and a transceiver module 1420. It should be understood that the transceiver module has a data sending and/or receiving capability.

The processing module 1410 is configured to determine an authentication request, where the authentication request includes second anonymous identity information. The transceiver module 1420 is configured to send the authentication request to a blockchain that supports a smart contract, where the second anonymous identity information is associated with identity information of the user node.

It should be understood that, that the user node sends the authentication request to a blockchain that supports a smart contract may be specifically that the user node sends the authentication request to a computing node on the blockchain that runs the smart contract.

Optionally, the processing module 1410 is further configured to encrypt the second anonymous identity information by using a private key of the user node.

Optionally, the authentication request may further include a first timestamp, and the first timestamp is associated with determining time of the authentication request.

Optionally, the authentication request may further include first identification information, and the second anonymous identity information may further include information about a user vehicle. The transceiver module 1420 is further configured to obtain the first identification information from a charging pile. The first identification information includes identification information of the charging pile and identification information of a charge service provider CSP node to which the charging pile belongs, and the charging pile is a charging pile to which the user vehicle is connected.

Optionally, the processing module 1410 is further configured to: display a plurality of to-be-selected CSP nodes in a charge service application in response to a CSP node obtaining operation of a user; display a plurality of to-be-selected charging piles in the charge service application in response to a CSP node selection operation of the user; and obtain the first identification information in response to a charging pile selection operation of the user.

Optionally, the authentication request may further include a first random number, and the processing module 1410 is further configured to obtain the first random number based on the first identification information, where the first random number is at least used to identify effectiveness of obtaining a charge service by the user vehicle.

Optionally, the transceiver module 1420 is further configured to send revenue information that is of the CSP node and that is received from the charging pile, where the revenue information is used to update an account balance of the CSP node.

Optionally, the revenue information is revenue information through additive homomorphic public key encryption of the CSP node.

Optionally, before the transceiver module 1420 is configured to send the authentication request to the blockchain that supports the smart contract, the transceiver module 1420 is further configured to: receive a third random number from a vehicle management node, where the third random number is a random number corresponding to first anonymous identity information; and send first information to the blockchain, where the first information includes the third random number.

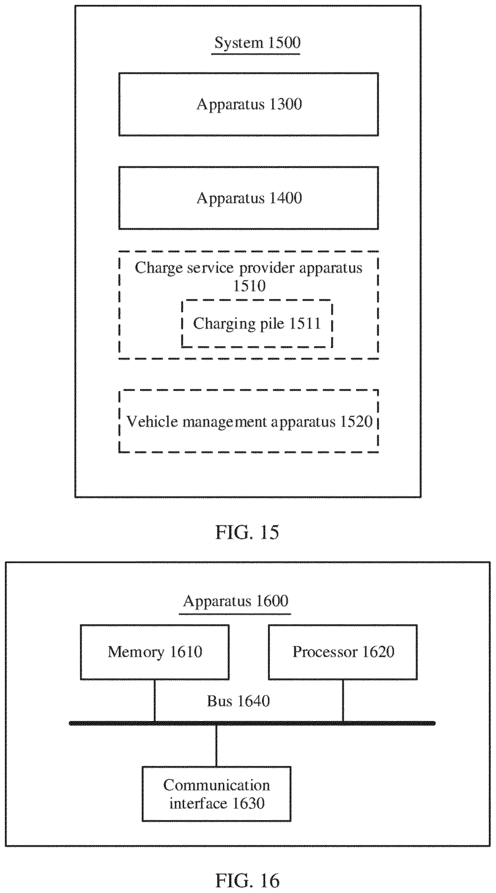

FIG. 15 is an identity authentication system 1500 according to an embodiment of this application. As shown in FIG. 15, the system 1500 includes an apparatus 1300 and an apparatus 1400. The apparatus 1300 is used in a blockchain that supports a smart contract, and may be configured to perform a related operation corresponding to the blockchain in the method embodiments of this application. The apparatus 1400 is used in a user node, and may be configured to perform a related operation corresponding to the user node in the method embodiments of this application.

Optionally, in an electric vehicle charge service, the system 1500 may further include a charge service provider apparatus 1510 and a charging pile 1511, and may be configured to perform related operations corresponding to a CSP node and the charging pile in the method embodiments of this application. A vehicle management node apparatus 1520 may be configured to perform a related operation corresponding to a vehicle management node in the method embodiments of this application.

FIG. 16 is an example block diagram of a hardware structure of an identity authentication apparatus according to an embodiment of this application. Optionally, the apparatus 1600 may be specifically a computer device. The apparatus 1600 includes a memory 1610, a processor 1620, a communication interface 1630, and a bus 1640. The processor 1620, the communication interface 1630, and the memory 1610 communicate with each other through an internal connection path. The memory 1610 is configured to store instructions. The processor 1620 is configured to execute the instructions stored in the memory 1610, to control the communication interface 1630 to send a signal and/or receive a signal.

It should be understood that the apparatus 1600 may correspond to steps and/or procedures performed by a blockchain (for example, a node having a computing capability in the blockchain) that supports a smart contract in the foregoing method embodiment, and may be configured to perform steps and/or procedures performed by a user node (for example, a user mobile terminal device) in the foregoing identity authentication method embodiment.

The memory 1610 may be a read-only memory, a static storage device, a dynamic storage device, or a random access memory, and provides instructions and data for the processor 1620. A part of the memory 1610 may further include a non-volatile random access memory. The memory 1610 may be an independent component, or may be integrated into the processor 1620. The processor 1620 may be configured to execute the instructions stored in the memory 1610. When the processor 1620 executes the instructions stored in the memory 1610, the processor 1620 is configured to perform the steps and/or the procedures of the identity authentication method embodiments corresponding to the blockchain (for example, a node having a computing capability in the blockchain) or the user node (for example, the user mobile terminal device) that supports the smart contract.

The communication interface 1630 uses a transceiver apparatus, for example but not for limitation, a transceiver, to implement communication between the apparatus 1600 and another device or a communication network.

The bus 1640 may include a path for transmitting information between the components (for example, the memory 1610, the processor 1620, and the communication interface 1630) of the apparatus 1600.

In a possible implementation, the apparatus 1600 is the blockchain (for example, the node having the computing capability in the blockchain) that supports the smart contract in the foregoing embodiment.

For example, the communication interface 1630 is configured to receive an authentication request from a user node, where the authentication request includes second anonymous identity information, and the second anonymous identity information is associated with identity information of the user node.

The processor 1620 is configured to determine, based on first anonymous identity information and the second anonymous identity information, whether identity authentication on the user node succeeds.

In another possible implementation, the apparatus 1600 is the user node (for example, the user mobile terminal device) in the foregoing embodiment.

For example, the processor 1620 is configured to determine an authentication request, where the authentication request includes the second anonymous identity information.

The communication interface 1630 is configured to send the authentication request to the blockchain that supports the smart contract, where the second anonymous identity information is associated with identity information of the user node.

In this embodiment of this application, the processor is a circuit having a signal processing capability. In an implementation, the processor may be a circuit having an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (Field Programmable Gate Array, FPGA). In a reconfigurable hardware circuit, a process in which the processor loads a configuration document to implement hardware circuit configuration may be understood as a process in which the processor loads an instruction to implement functions of some or all of the foregoing units. In addition, the circuit may be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that the units in the foregoing apparatus may be configured as one or more processors (or processing circuits) that implements the foregoing method, for example, the CPU, the GPU, the NPU, the TPU, the DPU, the microprocessor, the DSP, the ASIC, the FPGA, or a combination of at least two of these processor forms. The modules in the foregoing apparatus may be understood as units herein.

In addition, all or some of the units in the foregoing apparatus may be integrated, or may be implemented independently. In an implementation, these units are integrated together and implemented in a form of a system-on-a-chip (system-on-a-chip, SOC). The SOC may include at least one processor, configured to implement any one of the foregoing methods or implement functions of units of the apparatus. Types of the at least one processor may be different, for example, include a CPU and an FPGA, a CPU and an artificial intelligence processor, a CPU and a GPU, and the like.

It should be understood that specific examples in embodiments of this application are merely intended to help a person skilled in the art better understand the technical solutions of this application, but are not intended to limit the scope of embodiments of this application.

An embodiment of this application further provides a vehicle-mounted component, including a related operation corresponding to a user node in the method embodiment of this application.

An embodiment of this application further provides a vehicle, including an electronic control unit. The electronic control unit is configured to perform a related operation corresponding to a user node in the method embodiment of this application.

An embodiment of this application further provides a computer-readable storage medium, including instructions, where the instructions are used to implement a related operation corresponding to a user node in the method embodiment of this application, and/or implement a related operation corresponding to a blockchain in the method embodiment of this application.

An embodiment of this application further provides a computer program product, including: a computer program, where when the computer program is run, a computer is enabled to perform a related operation corresponding to a user node in the method embodiment of this application; and/or perform a related operation corresponding to a blockchain in the method embodiment of this application.

An embodiment of this application further provides a computing device, including at least one processor and a memory. The at least one processor is coupled to the memory, and is configured to read and execute instructions in the memory, to perform a related operation corresponding to a user node in the method embodiment of this application, and/or perform a related operation corresponding to a blockchain in the method embodiment of this application.

An embodiment of this application further provides a chip. The chip includes a processor and a data interface. The processor reads, through the data interface, instructions stored in the memory, to perform a related operation corresponding to a user node in the method embodiment of this application; and/or perform a related operation corresponding to a blockchain in the method embodiment of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be understood that division of the units in the foregoing apparatus is merely division of logical functions. The units may be understood as modules in the foregoing apparatus. In actual implementation, all or some of the units may be integrated into one physical entity, or may be physically separated. In addition, a unit in the apparatus may be implemented in a form of a processor invoking software. For example, the apparatus includes a processor, the processor is connected to a memory, the memory stores instructions, and the processor invokes the instructions stored in the memory to implement any one of the foregoing methods or functions of units in the apparatus. The processor is, for example, a general-purpose processor, like a central processing unit or a microprocessor, and the memory is a memory inside the apparatus or a memory outside the apparatus. Alternatively, a unit in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit, and functions of some or all units are implemented by designing a logical relationship between elements in the circuit. For another example, in another implementation, the hardware circuit may be implemented by using a programmable logic device. Using a field programmable gate array as an example, the hardware circuit may include a large quantity of logic gate circuits, and a connection relationship between the logic gate circuits is configured by using a profile, to implement functions of some or all of the foregoing units. All the units of the foregoing apparatus may be implemented in a form of software invoked by a processor, or may be implemented in a form of a hardware circuit, or some of the units are implemented in a form of software invoked by a processor, and remaining units are implemented in a form of a hardware circuit.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. An identity authentication method, wherein the method is performed by a blockchain that supports a smart contract, the blockchain stores first anonymous identity information, and the method comprises:

   receiving an authentication request from a user node, wherein the authentication request comprises second anonymous identity information, and the second anonymous identity information is associated with identity information of the user node; and
   determining, based on the first anonymous identity information and the second anonymous identity information, whether identity authentication on the user node succeeds.

2. The method according to claim 1, wherein the authentication request comprises the second anonymous identity information encrypted by using a private key of the user node, and the method further comprises:
   decrypting the authentication request information based on a public key corresponding to the private key of the user node, to obtain the second anonymous identity information.

3. The method according to claim 1 or 2, wherein the authentication request further comprises a first timestamp, and before the determining, based on the first anonymous identity information and the second anonymous identity information, whether identity authentication on the user node succeeds, the method further comprises:
   determining that the first timestamp is within a preset time range.

4. The method according to any one of claims 1 to 3, wherein the authentication request further comprises first identification information, the second anonymous identity information comprises information about a user vehicle, the first identification information comprises identification information of a charging pile and identification information of a charge service provider CSP node to which the charging pile belongs, the charging pile is a charging pile to which the user vehicle is connected, and the method further comprises:
   after the identity authentication succeeds, sending indication information to the CSP node, wherein the indication information indicates the CSP node to provide a charge service for the user vehicle by using the charging pile.

5. The method according to claim 4, wherein the authentication request further comprises a first random number, the first random number is a random number obtained by the user node from the charging pile, and before the sending indication information to the CSP node, the method further comprises:

   requesting a random number of the charging pile from the CSP node;
   receiving a second random number from the CSP node, wherein the second random number is a random number used before the random number of the charging pile is updated; and
   determining that the first random number matches the second random number.

6. The method according to claim 4 or 5, wherein the method further comprises:

   receiving revenue information that is of the CSP node and that is sent by the user node; and
   updating an account balance of the CSP node based on the revenue information.

7. The method according to claim 6, wherein the revenue information is revenue information encrypted by using an additive homomorphic public key of the CSP node.

8. The method according to any one of claims 1 to 7, wherein before the receiving an authentication request from a user node, the method further comprises:

   receiving first information sent by the user node, wherein the first information comprises a third random number, and the third random number is a random number corresponding to the first anonymous identity information;
   sending second information to a vehicle management node, wherein the second information comprises the third random number;

receiving the first anonymous identity information determined by the vehicle management node based on the third random number; and

storing a correspondence between an identifier of the user node and the first anonymous identity information in the smart contract of the blockchain, wherein the identifier of the user node is generated by the blockchain when the user node accesses the blockchain.

9. An identity authentication method, wherein the method is performed by a user node, and the method comprises:

determining an authentication request, wherein the authentication request comprises second anonymous identity information; and

sending the authentication request to a blockchain that supports a smart contract, wherein the second anonymous identity information is associated with identity information of the user node.

10. The method according to claim 9, wherein the authentication request further comprises a first timestamp, and the first timestamp is associated with determining time of the authentication request.

11. The method according to claim 9 or 10, wherein the authentication request further comprises first identification information, the second anonymous identity information comprises information about a user vehicle, and the method further comprises:

obtaining the first identification information from a charging pile, wherein the first identification information comprises identification information of the charging pile and identification information of a charge service provider CSP node to which the charging pile belongs, and the charging pile is a charging pile to which the user vehicle is connected.

12. The method according to claim 11, wherein the obtaining the first identification information from a charging pile comprises:

displaying a plurality of to-be-selected CSP nodes in a charge service application in response to a CSP node obtaining operation of a user;

displaying a plurality of to-be-selected charging piles in the charge service application in response to a CSP node selection operation of the user; and

obtaining the first identification information in response to a charging pile selection operation of the user.

13. The method according to claim 11 or 12, wherein the authentication request further comprises a first random number, and the determining an authentication request further comprises:

obtaining the first random number based on the first identification information, wherein the first random number is at least used to identify effectiveness of obtaining the charge service by the user vehicle.

14. The method according to any one of claims 11 to 13, wherein the method further comprises:

sending revenue information that is of the CSP node and that is received from the charging pile, wherein the revenue information is used to update an account balance of the CSP node.

15. An identity authentication apparatus, wherein the apparatus is used in a blockchain that supports a smart contract, the blockchain stores first anonymous identity information, and the apparatus comprises a transceiver module and a processing module, wherein

the transceiver module is configured to receive an authentication request from a user node, the authentication request comprises second anonymous identity information, and the second anonymous identity information is associated with identity information of the user node; and

the processing module is configured to determine, based on the first anonymous identity information and the second anonymous identity information, whether identity authentication on the user node succeeds.

16. The apparatus according to claim 15, wherein the authentication request comprises the second anonymous identity information encrypted by using a private key of the user node; and

the processing module is further configured to decrypt the authentication request information based on a public key corresponding to the private key of the user node, to obtain the second anonymous identity information.

17. The apparatus according to claim 15 or 16, wherein the authentication request further comprises a first timestamp, and before determining, based on the first anonymous identity information and the second anonymous identity information, whether the identity authentication on the user node succeeds,
the processing module is further configured to determine that the first timestamp is within a preset time range.

18. The apparatus according to any one of claims 16 to 17, wherein the authentication request further comprises first identification information, the second anonymous identity information comprises information about a user vehicle, the first identification information comprises identification information of a charging pile and identification information of a charge service provider CSP node to which the charging pile belongs, and the charging pile is a charging pile to which the user vehicle is connected; and
after the identity authentication succeeds, the processing module is further configured to send indication information to the CSP node, wherein the indication information indicates the CSP node to provide a charge service for the user vehicle by using the charging pile.

19. The apparatus according to claim 18, wherein the authentication request further comprises a first random number, the first random number is a random number obtained by the user node from the charging pile, and before the indication information is sent to the CSP node,

   the transceiver module is further configured to request a random number of the charging pile from the CSP node;
   the transceiver module is further configured to receive a second random number from the CSP node, wherein the second random number is a random number used before the random number of the charging pile is updated; and
   the processing module is further configured to determine that the first random number matches the second random number.

20. The apparatus according to claim 18 or 19, wherein

   the transceiver module is further configured to receive revenue information that is of the CSP node and that is sent by the user node; and
   the processing module is further configured to update an account balance of the CSP node based on the revenue information.

21. The apparatus according to claim 20, wherein the revenue information is revenue information encrypted by using an additive homomorphic public key of the CSP node.

22. The apparatus according to any one of claims 15 to 21, wherein before the authentication request is received from the user node,

   the transceiver module is further configured to receive first information sent by the user node, wherein the first information comprises a third random number, and the third random number is a random number corresponding to the first anonymous identity information;
   the transceiver module is further configured to send second information to a vehicle management node, wherein the second information comprises the third random number;
   the transceiver module is further configured to receive the first anonymous identity information determined by the vehicle management node based on the third random number; and
   the processing module is further configured to store a correspondence between an identifier of the user node and the first anonymous identity information in the smart contract of the blockchain, wherein the identifier of the user node is generated by the blockchain when the user node accesses the blockchain.

23. An identity authentication apparatus, wherein the apparatus is used in a user node, and the apparatus comprises a processing module and a transceiver module, wherein

   the processing module is configured to determine an authentication request, wherein the authentication request comprises second anonymous identity information; and
   the transceiver module is configured to send the authentication request to a blockchain that supports a smart contract, wherein the second anonymous identity information is associated with identity information of the user node.

24. The apparatus according to claim 23, wherein the authentication request further comprises a first timestamp, and

the first timestamp is associated with determining time of the authentication request.

25. The apparatus according to claim 23 or 24, wherein the authentication request further comprises first identification information, and the second anonymous identity information comprises information about a user vehicle; and
the processing module is further configured to obtain the first identification information from a charging pile, wherein the first identification information comprises identification information of the charging pile and identification information of a charge service provider CSP node to which the charging pile belongs, and the charging pile is a charging pile to which the user vehicle is connected.

26. The apparatus according to claim 25, wherein that the processing module is further configured to obtain the first identification information from a charging pile comprises:

the processing module is further configured to display a plurality of to-be-selected CSP nodes in a charge service application in response to a CSP node obtaining operation of a user;
the processing module is further configured to display a plurality of to-be-selected charging piles in the charge service application in response to a CSP node selection operation of the user; and
the processing module is further configured to obtain the first identification information in response to a charging pile selection operation of the user.

27. The apparatus according to claim 25 or 26, wherein the authentication request further comprises a first random number, and the determining an authentication request further comprises:
the processing module is further configured to obtain the first random number based on the first identification information, wherein the first random number is at least used to identify effectiveness of obtaining the charge service by the user vehicle.

28. The apparatus according to any one of claims 25 to 27, wherein
the transceiver module is further configured to send revenue information that is of the CSP node and that is received from the charging pile, wherein the revenue information is used to update an account balance of the CSP node.

29. An identity authentication system, wherein the system comprises a blockchain that supports a smart contract and that is configured to perform the identity authentication method according to any one of claims 1 to 8, and/or a user node that is configured to perform the identity authentication method according to any one of claims 9 to 17.

30. A computer-readable storage medium, comprising instructions, wherein the instructions are used to implement the identity authentication method according to any one of claims 1 to 8, and/or implement the identity authentication method according to any one of claims 9 to 17.

110

120 Central server layer

121

122

Database

130 User layer

131

132

140 Charging device layer

141

FIG. 1

S210: A blockchain that supports a smart contract receives an authentication request from a user node, where the authentication request includes second anonymous identity information, and the second anonymous identity information is associated with identity information of the user node

S220: Determine, based on first anonymous identity information and the second anonymous identity information, whether the identity information of the user node succeeds, where the blockchain stores the first anonymous identity information

FIG. 2

FIG. 3

EP 4 443 364 A1

S401: Initialization of different CSP nodes

S402: Registration of a user node

S403:
The user node requests
a charge service, and a blockchain
that supports a
smart contract performs
authentication

Authentication fails → S405: A charging pile does not provide the charge service for a user vehicle

Authentication succeeds

S404: A charging pile provides the charge service for a user vehicle

S406: The user node pays a charging fee

S407: The charge service ends

FIG. 4

| Charging pile | First CSP node | Blockchain |

S501: Access a blockchain that supports a smart contract

S502: Store an on-chain address of the first CSP node

S503: Determine a public-private key pair of the first CSP node

S504: Send a public key of the first CSP node

S506: Generate a charging authentication random number corresponding to the charging pile

S505: Store a mapping relationship between the public key of the first CSP node and the on-chain address of the first CSP node

S507: Send the charging authentication random number

FIG. 5

Vehicle management node

Blockchain

S601: Access a blockchain that supports a smart contract

S602: Store an on-chain address of the DMV node

S603: Determine a public-private key pair of the DMV node

S604: Send a public key of the DMV

S605: Store a mapping relationship between the public key of the DMV and the on-chain address of the DMV node

FIG. 6

User node | Vehicle management node | Blockchain

S701: Generate first anonymous identity information based on identity information and vehicle information of an authorized user

S702: Send the first anonymous identity information

S703: Access a blockchain that supports a smart contract and generate a public-private key pair of the user node

S704: Generate an on-chain address of the user node

S705: Encrypt first identity information based on a private key of the user node, to generate a first ciphertext

S706: Send third information

S707: Store a mapping relationship between a public key of the user node and an address of the user node

S708: Decrypt the first ciphertext by using the public key of the user node, and if the decryption succeeds, store a mapping relationship between the on-chain address of the user node and the first anonymous identity information

S709: Decrypt the first ciphertext by using the public key of the user node, where the decryption fails

S710: Send a registration failure message to indicate the user node to re-register

FIG. 7

| User node | Vehicle management node | Blockchain |
|---|---|---|

S801: Generate first anonymous identity information and a third random number based on identity information and vehicle information of an authorized user

S802: Send the first anonymous identity information and the third random number

S803: Access a blockchain that supports a smart contract and generate a public-private key pair of the user node

S804: Generate an on-chain address of the user node

S805: Encrypt the third random number based on a public key of the DMV, to generate a second ciphertext

S806: Send first information

S807: Store a mapping relationship between a public key of the user node and an address of the user node

S808: Send second information

TO FIG. 8B     TO FIG. 8B     TO FIG. 8B

FIG. 8A

37

CONT.
FROM
FIG. 8A

CONT.
FROM
FIG. 8A

CONT.
FROM
FIG. 8A

S809: Decrypt the second ciphertext by using a private key of the DMV to obtain the third random number, and encrypt the first anonymous identity information corresponding to the third random number by using the private key of the DMV to obtain a first ciphertext

S810: Send the first ciphertext

S811: Decrypt the first ciphertext by using the public key of the DMV, and if the decryption succeeds, store a mapping relationship between the on-chain address of the user node and the first anonymous identity information

S812: Decrypt the first ciphertext by using the public key of the DMV node, where the decryption fails

S813: Send a registration failure message to indicate the user node to re-register

FIG. 8B

```
┌─────────────────┐        ┌─────────────────┐        ┌─────────────────┐
│   User node     │        │   Blockchain    │        │ First CSP node  │
└────────┬────────┘        └────────┬────────┘        └────────┬────────┘
         │                          │                          │
┌────────┴────────────────┐         │                          │
│ S901: Obtain first      │         │                          │
│ identification          │         │                          │
│ information             │         │                          │
└────────┬────────────────┘         │                          │
┌ ─ ─ ─ ─┴─ ─ ─ ─ ─ ─ ─ ─ ┐         │                          │
  S902: Obtain a first random│       │                          │
  number                    │        │                          │
└ ─ ─ ─ ─┬─ ─ ─ ─ ─ ─ ─ ─ ┘         │                          │
┌────────┴────────────────┐         │                          │
│ S903: Encrypt an        │         │                          │
│ authentication request  │         │                          │
│ by using a private key  │         │                          │
│ of the user node, to    │         │                          │
│ obtain a third          │         │                          │
│ ciphertext              │         │                          │
└────────┬────────────────┘         │                          │
         │  S904: Send the third    │                          │
         │      ciphertext          │                          │
         │─────────────────────────▶│                          │
         │              ┌───────────┴──────────────┐           │
         │              │ S904: Decrypt the third  │           │
         │              │ ciphertext based on a    │           │
         │              │ public key of the user   │           │
         │              │ node, to obtain the      │           │
         │              │ authentication request,  │           │
         │              │ and determine whether the│           │
         │              │ authentication request   │           │
         │              │ is correct               │           │
         │              └───────────┬──────────────┘           │
         │                          │ S905: Indicate whether a │
         │                          │ charging pile of the     │
         │                          │ first CSP node provides  │
         │                          │ a charge service         │
         │                          │─────────────────────────▶│
         │                          │                          │
```

FIG. 9

FIG. 10

```
┌────────────────┐        ┌───────────┐        ┌──────────────┐
│ Charging pile  │        │ User node │        │  Blockchain  │
└────────┬───────┘        └─────┬─────┘        └──────┬───────┘
```

S1101: Encrypt charging fee information based on an additive homomorphic public key of the user node and an additive homomorphic public key of a first CSP node, to obtain a fee ciphertext of the user node and a revenue ciphertext of the first CSP node

S1102: Sign the fee ciphertext of the user node and the revenue ciphertext of the first CSP node based on an additive homomorphic private key of the first CSP node, to obtain a first signature

S1103: Send the first signature

S1104: Decrypt the fee ciphertext of the user node based on the additive homomorphic public key of the first CSP node and an additive homomorphic private key of the user node, to obtain the charging fee information

S1105: Update local balance information of a user based on the charging fee information

S1106: Send the first signature

S1107: Verify the first signature based on the additive homomorphic public key of the first CSP node, to obtain the fee ciphertext of the user node and the revenue ciphertext of the first CSP node

S1108: Update balance information of an account of the user node and an account of the first CSP node on a chain based on the fee ciphertext of the user node and the revenue ciphertext of the first CSP node

FIG. 11

5G .ıll 5G .ıll 📶    🔋 8:00

1201 Charge
     service
     app

Camera    Contacts    Phone    Messaging

FIG. 12(a)

FIG. 12(b)

FIG. 12(c)

FIG. 12(d)

Apparatus 1300

Processing module 1310

Transceiver module 1320

FIG. 13

Apparatus 1400

Processing module 1410

Transceiver module 1420

FIG. 14

System 1500

Apparatus 1300

Apparatus 1400

Charge service provider apparatus 1510

Charging pile 1511

Vehicle management apparatus 1520

FIG. 15

Apparatus 1600

Memory 1610

Processor 1620

Bus 1640

Communication interface 1630

FIG. 16

## INTERNATIONAL SEARCH REPORT

| | International application No. |
|---|---|
| | **PCT/CN2021/143588** |

| **A.** | **CLASSIFICATION OF SUBJECT MATTER** |
|---|---|

G06Q 20/14(2012.01)i; H04L 9/32(2006.01)i

According to International Patent Classification (IPC) or to both national classification and IPC

| **B.** | **FIELDS SEARCHED** |
|---|---|

Minimum documentation searched (classification system followed by classification symbols)

G06F,G06Q,H04L

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 区块链, 身份, 匿名, 认证, 智能合约, 相同, 匹配, 比较, 车, 节点, 公钥, 私钥, 时间戳, 充电桩, 设备, 装置, 存储, 保存, 标识, 充电服务提供商, 运营商, 随机数, blockchain, identity, anonymity, authentication, smart contract, same, match, compare, car, vehicle, node, public key, private key, timestamp, charging post, device, apparatus, store, save, identity, ID, charging service provider, CSP, operator, random number

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 112926092 A (ALIPAY (HANGZHOU) INFORMATION TECHNOLOGY CO., LTD.) 08 June 2021 (2021-06-08) claims 11-12 and 25 | 1-3, 9-10, 15-17, 23-24, 29-30 |
| A | CN 109962890 A (INSTITUTE OF INFORMATION ENGINEERING, CHINESE ACADEMY OF SCIENCES) 02 July 2019 (2019-07-02) entire document | 1-30 |
| A | CN 112561706 A (STATE GRID BLOCKCHAIN TECHNOLOGY (BEIJING) CO., LTD.; STATE GRID CORP. OF CHINA et al.) 26 March 2021 (2021-03-26) entire document | 1-30 |
| A | CN 112689981 A (HUAWEI TECHNOLOGIES CO., LTD.) 20 April 2021 (2021-04-20) entire document | 1-30 |
| A | CN 111372248 A (NANTONG UNIVERSITY) 03 July 2020 (2020-07-03) entire document | 1-30 |
| A | CN 104518529 A (ZTE CORP.) 15 April 2015 (2015-04-15) entire document | 1-30 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 September 2022** | **29 September 2022** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/143588**

**C.    DOCUMENTS CONSIDERED TO BE RELEVANT**

| Category* | Citation of document, with indication, where appropriate, of the relevant passages | Relevant to claim No. |
|---|---|---|
| A | CN 112039872 A (WUHAN JIANBANG RONGZHI TECHNOLOGY CO., LTD.) 04 December 2020 (2020-12-04)<br>    entire document | 1-30 |
| A | US 2018124600 A1 (NATIONAL CHIN-YI UNIVERSITY OF TECHNOLOGY) 03 May 2018 (2018-05-03)<br>    entire document | 1-30 |

Form PCT/ISA/210 (second sheet) (January 2015)

## INTERNATIONAL SEARCH REPORT
### Information on patent family members

International application No.

**PCT/CN2021/143588**

| Patent document cited in search report | | | Publication date (day/month/year) | Patent family member(s) | | | Publication date (day/month/year) |
|---|---|---|---|---|---|---|---|
| CN | 112926092 | A | 08 June 2021 | None | | | |
| CN | 109962890 | A | 02 July 2019 | None | | | |
| CN | 112561706 | A | 26 March 2021 | None | | | |
| CN | 112689981 | A | 20 April 2021 | WO | 2021031061 | A1 | 25 February 2021 |
| | | | | EP | 3857856 | A1 | 04 August 2021 |
| CN | 111372248 | A | 03 July 2020 | None | | | |
| CN | 104518529 | A | 15 April 2015 | WO | 2015043247 | A1 | 02 April 2015 |
| CN | 112039872 | A | 04 December 2020 | None | | | |
| US | 2018124600 | A1 | 03 May 2018 | None | | | |

Form PCT/ISA/210 (patent family annex) (January 2015)